# EUROPEAN PATENT SPECIFICATION

(11) **EP 4 318 254 B1**
(45) Date of publication and mention of the grant of the patent: **24.09.2025**
(21) Application number: 22189135.1
(22) Date of filing: 05.08.2022
(51) Int. Cl.: G06F 15/78

(54) **SEMICONDUCTOR DEVICE SYSTEM**
HALBLEITERVORRICHTUNGSSYSTEM
SYSTÈME DE DISPOSITIF À SEMI-CONDUCTEUR

(43) Date of publication of application: 07.02.2024
(73) Proprietor: Fraunhofer-Gesellschaft zur Förderung der angewandten Forschung e.V., 80686 München (DE)
(72) Inventor: Pscheidl, Ferdinand, 80686 München (DE); Leugering, Johannes, 91058 Erlangen (DE)
(74) Representative: Schenk, Markus

(56) References cited:
- WO-A1-2019/118363
- WO-A2-2022/090542
- US-A1- 2008 305 831
- US-A1- 2010 162 265

## Description

The invention relates to a semiconductor device and some possible applications. In particular there are disclosed techniques for interfaces and control flow for a multi-core semiconductor device architecture for globally asynchronous processing of continuous time binary valued signals.

Consider a scalable system constructed from the interconnected hardware nodes each of which may contain analog, digital or mixed-signal. Assume that the hardware nodes run simultaneously, produce globally asynchronous continuous-time binary value (CTBV) output signals and/or receive CTBV input signals, where the absolute timing of the signals (e.g. rising and falling signal edges) conveys information. The transmission delay should be minimal, and must be latency-deterministic for a given configuration of the semiconductor device system, i.e. independent of the processed data. Assume further that some parameters of the nodes as well as the connections between them need to be (partially) reconfigurable at runtime, e.g. to allow a time-multiplexed operation of the system, but this must not cause a loss of data while (parts of) the system reconfigure. Finally, the system should be able to operate in a self-timed mode.

One specific example of this situation occurs in neuromorphic computing, where the nodes contain mixed-signal implementations of (groups of) spiking neurons and their synaptic connections, and the entire system implements an accelerator for spiking neural networks (SNNs). It is in general difficult to define a scalable system architecture comprising an interconnect system and interfaces that support configurable routing of simultaneous CTBV signals with fixed and deterministic (for a given configuration) transmission delays. Current implementations usually circumvent this problem by instead transmitting the timing information contained in the CTBV signals via dynamically routed packages, which typically contain both a time-stamp as well as additional information required for routing.

It is also difficult to define a control flow and interfaces that support the partial, self-timed and self-controlled run-time reconfiguration of the system, e.g. for the purpose of time-multiplexing, without introducing unnecessary latency and without causing a loss of data during the reconfiguration periods.

Prior art is rooted in different research fields. Such fields are field-programmable analog arrays (FPAAs), field-programmable gate arrays (FPGAs), globally asynchronous locally synchronous (GALS) chip architectures and neuromorphic processors. In none of these fields a system architecture with control hierarchy and processing scheme was proposed previously, which supports both
a) transmitting CTBV signals between processing nodes in a free-running processing phase, which can convey important information in their absolute timing, with for a given configuration constant transmission delays and
b) time-multiplexed operation with partial, self-timed and self-controlled run-time reconfiguration between processing phases.

FPGAs [1] [2], FPAAs [3] [4] or field programmable mixed-signal arrays (FPMAs) [5] present some degree of configurability of connections between programmable function units (PFUs) or analog circuits (e.g. filters [4]). These classes of devices can realize, within limits, arbitrary functionality by synthesis, i.e. by opportunely connecting and configuring these components so that they realize a specified behavior. However, given the limitations imposed by the available components within such a device, the synthesizable circuits result to be substantially slow, poorly power-efficient, and require considerable space. In particular, these classes of devices typically do not provide any special circuitry to support the above-mentioned runtime reconfigurability of the system, separation of CTBV signals and configuration data, and the self-timed operation as explained later. In the specific context of neuromorphic hardware, the functionality of the constituting parts (neurons and synapses) is typically described in terms of analog circuits that, in general, fail to have an equivalent, efficient FPGA-, FPAA- or FPMA-synthesizable solution.

Globally asynchronous locally synchronous (GALS) architectures are systems where processing nodes can run locally synchronously, but communicate globally asynchronously with each other. Typical implementations of GALS architectures connect multiple locally synchronously operated processing nodes via an asynchronous interconnect system or Network-on-Chip (NoC), that uses some kind of synchronizers at the interfaces to locally synchronously operated circuits. A typical GALS architecture may have an asynchronous wrapper implementing handshake-based communication between processing nodes [6] [7]. Other implementations often use FIFO synchronizers [6] [8] [9].

The handshake-based communication usually is implemented with request and acknowledge 2-phase or 4-phase protocol [10]. When also transmitting data besides performing the handshake, a bundled data communication protocol can be applied where the delays of the handshake signals must be longer than the ones of the data signals. If timing assumptions are not possible delay-insensitive data codes can be used to encode whether a signal is currently valid within the signal itself. Popular codes are the dual-rail code, where one bit is encoded with two bits or 1-of-N codes, where one wire is used for each value of the data [10].

A GALS system has been proposed with the same split between processing nodes and communication nodes, where an asynchronous NoC architecture is described. There is proposed a package-switched communication via routers with each five connections, four to other routers in a grid and one to an associated synchronous processing node. Between routers data is transferred based on a handshake with a bundled data protocol. Besides the actual data the transmitted data also contains information about the path to the target of the data and its priority. At the input port of a router data is forwarded to one output port based on the path information. While high priority data is processed at the next possible time, low priority data is buffered at the output port. The buffered data is transmitted with a first arrived, first served prioritization. It is argued that at system level the routing algorithm will ensure that high priority data should never conflict. This constraint limits the number of possible paths through one router at the same time that can carry high priority data to one. Low priority data is allowed to conflict and then be delayed. Therefore, the transmission delays in the described system are priority and traffic dependent. With priority and traffic dependent delays it becomes very difficult or even impossible to encode information directly in the timing of data. An example GALS system architecture also describing system control and program execution for performing a spiking convolution is given in [8]. The system consists of a global controller called Hub and multiple locally synchronous processing nodes called neurons, each connected to the Hub via FIFO synchronizers. The Hub uses the same FIFO to broadcast to all neurons time-multiplexed, what means multiple neurons cannot be fed with inputs simultaneously. Therefore, any information directly encoded into the timing of signals generated by neurons is lost.

Local memories of the neurons are only updated when receiving input spikes and not used for configuration of the neuron. All configuration is located in the Hub.

Different neuromorphic processors with different levels of complexity and programmability have been proposed so far. First existing systems will be categorized in dependence on how they implement synaptic connections between neurons.

The first class uses dedicated signals for all the neurons' in- and outputs, which are arranged into a so-called crossbar structure [12]. Here, the neurons' outputs (as well as external inputs) are connected to the rows of the crossbar, whereas the neurons' inputs are connected to the columns (or vice versa). By appropriately setting programmable switches that each connect one column to one row, arbitrary connections between the neurons' outputs (or external inputs) and the neurons' inputs can be established. This type of interconnect can operate asynchronously, but the number of programmable switches and thus its area grows quadratically with the number of neurons in the network. Some variations of this architecture therefore reduce the degrees of freedom by either (partially) randomizing connections or by (partially) enforcing regular connectivity structures. Crucially, these architectures typically sum up multiple incoming signals in the analog domain by connecting multiple input signals to the same output signal. Often, multi-level resistive, memristive or equivalent devices are used instead of binary switches to implement analog in-memory computing. In that case, the interconnect uses analog or mixed signals. As a standalone solution without interconnections of any other type between the output of a crossbar and it's input or the inputs of another crossbar, such a solution does not provide the same level of programmability and flexibility as the invented system architecture.

The second class of neuromorphic processors uses interconnects that consists of a regular network-on-chip that transmits individual spike events as digital packages. Examples of this are proposed in [13] and [14] and patented in [12] and [15]. Since amplitude information of a spike is usually binary and the timing of a spike event should be given implicitly by the time at which the package is generated, the only information to be transmitted is the target address of the package. Based on the target address contained in the package, each router in the NoC forwards the package in the appropriate direction until it reaches its destination. This routing scheme and variations thereof are known as *Address Event Representation* (AER) and widely used. Both synchronous and asynchronous versions of this approach are in use. The area consumption for this form of package-switched routing only grows linearly with the number N of neurons (if the bus width is fixed and wider addresses are serialized) or proportionally to N log(N) (if the bus-width is chosen wide enough to hold the entire target address in parallel). However, package switched routing requires that each spike's address is encoded into a multi-bit digital package, which then has to traverse multiple routers on its way to the target. Each router must decode this address information, and must implement arbitration between simultaneously arriving spikes. Since each router is shared between many different signal paths, congestion can occur, which has to be resolved or prevented through appropriate routing strategies and handshaking. This in turn adds substantial complexity and usually traffic dependent transmission delays as already argued previously. For example, In a system as proposed in [16], AER as an input protocol does not allow the parallel processing of multiple near simultaneous input spikes, which makes it impossible to encode information directly in the precise timing of signals. In [13] timing information of spikes is captured by adding a time-stamp to every spike package and in [14] a global synchronization of time steps ensures that spikes of one time step are processed together in the next one.

The third class of SNN accelerators combines the former two approaches in some hierarchical structure. On a lower level of the hierarchy, multiple neurons are densely interconnected by some form of a crossbar into cores (also variously referred to as tiles or (neural) processing units). These cores are interconnected through some form of package-switched NoC, potentially via multiple levels of hierarchy. For these systems the same arguments can be applied as for the second class.

Regarding the control flow both Intel's Loihi [14] [17] and IBM's TrueNorth [13] [15] also use global synchronization for distinct phases of operation. TrueNorth uses global synchronization signals called ticks. Within each tick each processing core is processing the spike messages in its input buffer it received during previous ticks, might generate new spike messages and transmits them to other processing cores globally asynchronously. Received spike messages are buffered and not processed before the next tick. A scheduler within each processing core is deciding whether a spike in its input buffer should be processed within this tick based on the time stamp information attached to each spike message. The synchronization here is only decided by the global synchronization signal and does not depend on any information of individual processing cores. The time per tick is decided based on the worst-case processing duration per tick. In TrueNorth processing is split into ticks to enable a global synchronization of the program execution, which results in quantization of spike timing to global synchronization steps (1ms in TrueNorth) and spikes generated within one tick or processing step cannot be processed within the same step. This drastically limits the possibility to encode information directly in spike timing.

Intel's Loihi has a slightly different approach, by not synchronizing processing steps with a constant global time period, but using feedback from all processing cores, which carries the information, that a processing core has processed all spikes it received at the previous processing step. When all processing cores have finished the last processing step the system moves on to the next one. This handshaking is implemented using a message-passing from one core to all its neighbors.

US 2010/0162265 A1 discloses a system on chip with multiple processing elements connected through routers. Asynchronous continuous-time binary value, CTBV, signals are not transmitted, and hard-wired connections are not achieved.

### Summary

The invention is defined in the independent clams.

In accordance to an aspect, there is provided a semiconductor device system comprising a central controller and a plurality of hardware nodes implemented in application-specific integrated circuit, ASIC, the hardware nodes being mutually interconnected with each other through a plurality of hard-wired connections which support the transmissions of globally asynchronous continuous-time binary value, CTBV, signals, in such a way that each hard-wired connection supports the propagation of one unique CTBV signal from first transmitting hardware node connected to the hard-wired connection to at least one receiving hardware node connected to the hard-wired connection, so as to define at least one point-to-point(s) communication path between at least two hardware nodes, configured as processing nodes, along a sequence of hard-wired connections connected to each other through at least one switching circuitry. The at least one switching circuitry may be controlled by at least one hardware node (e.g. each switching circuitry may be part of a respective hardware node configured as communication node), of the plurality of hardware nodes, which is configured as communication node. The at least one switching circuitry (e.g. each switching circuity) may be configured to selectably connect, based on configuration data, at least two hard-wired connections in the sequence of hard-wired connections, so as to permit the transmission of each CTBV signal along the sequence of hard-wired connections (e.g. a sequence of hard-wired alternated with switching circuitries may define a path-to-path communication path). The at least one switching circuitry may be, according to an aspect, latency-deterministic. Each hardware node of the plurality of hardware nodes may be configured to download configuration data through a package-switched configuration communication path.

The semiconductor device system according to a previous aspect, wherein at least one hardware node of the plurality of hardware nodes is selectably configurable, by the configuration data, between:
being configured as a processing node; and
being configured as a communication node.

The semiconductor device system of any of the preceding aspects, wherein at least one hardware node configured as a communication node includes:
at least one first switching circuitry terminal connected to at least one first hard-wired connection;
at least one second switching terminal connected to at least one second latency-deterministic hard-wired connection;
at least one third switching terminal connected to at least one third latency-deterministic hard-wired connection,
the at least one hardware node being configured to select between:
connecting the first switching circuitry terminal with the at least one second switching circuitry terminal, thereby being part of a first point-to-point(s) communication path; and
connecting the first switching circuitry terminal with the at least one third switching circuitry terminal, thereby being part of a second point-to-point(s) communication path, thereby deactivating the first point-to-point(s) communication path.

In accordance to an aspect, the at least one switching circuitry is so as to delay the propagation of the CTBV signal only based on the hardware configuration of the at least one switching circuitry but not on any of the CTBV signal(s) inputted to the switching circuitry.

In accordance to an aspect, the at least one switching circuitry is an asynchronous combinatorial component.

In accordance to an aspect, each hardware node configured as processing node and each hardware node configured as communication node being configured to be sequentially in one of at least the following phases:
an operative phase, in which the hardware node is operative to receive CTBV signals and perform processing on received CTBV signals and/or to perform processing to obtain processed CTBV signals and to transmit them; and
a non-operative phase, in which the hardware node performs a non-operative procedure, refraining from transmitting and receiving CTBV signals,
the central controller being configured to transmit a global start command and a global stop command towards the plurality of hardware nodes,
wherein each hardware node configured as processing node and each hardware node configured as communication node is configured to enter the operative phase from the non-operative phase triggered by the reception of the global start command, and/or each hardware node configured as processing node and each hardware node configured as communication node is configured to enter the non-operative phase from the operative phase triggered by the reception of a global stop command.

In accordance to an aspect, each hardware node is configured, when in non-operative phase but ready to enter the operative phase, to provide information signalling readiness to enter the operative phase to the central controller, wherein the central controller is configured to trigger the transmission of the global start command at the reception of the information signalling readiness to enter the operative phase of the totality of hardware nodes configured as processing nodes and by the totality of hardware nodes configured as communication nodes.

In accordance to an aspect, the semiconductor device is connectable to a further semiconductor device having a second-tier controller and a plurality of further hardware nodes, wherein the central controller is configured, when connected to the further semiconductor device, to transmit the global start command and/or the global stop command also to the further semiconductor device, the central controller being configured to receive, from the second-tier controller, information signalling readiness to enter the operative phase by the further hardware nodes.

In accordance to an aspect, each hardware node is configured, once in the non-operative phase, to download, if present, configuration data onto a local configuration memory of the hardware node, the hardware node being configured to subsequently:
in case the configuration data have been received, perform a reconfiguration using the downloaded configuration data; and
in case the configuration data have not been received, either perform a reconfiguration using previously downloaded configuration data, or perform a re-initialization.

In accordance to as aspect, the non-operative phase includes, as subphases, a configuration download phase and at least one transition phase,
wherein during the configuration download phase each hardware node configured as processing node and each hardware node configured as communication node is ready to download the configuration data and, provided that the configuration data are present, it also downloads the configuration data,
wherein the reconfiguration or re-initialization is performed during the at least one transition phase,
wherein entering into the configuration download phase is conditioned by the reception of a configuration download command provided to each of the plurality of hardware nodes configured as processing nodes and configured as communication nodes or to a subgroup of them which is to be reconfigured,
wherein entering into the at least one transition phase is conditioned by the reception of a transition command, provided to the hardware node.

In accordance to an aspect, the local configuration memory includes multiple enumerated memory segments enumerated according to a predetermined sequence, wherein each hardware node configured as processing node and each hardware node configured as communication node is configured, during the same non-operative phase, to download multiple enumerated configuration data to be written in the multiple enumerated memory segments according to the predetermined sequence,
wherein the hardware node is configured, in subsequent occurrences of the non-operative phase, to use the previously written enumerated configuration data according to the predetermined sequence for performing subsequent reconfigurations or re-initializations, without downloading the configuration data.

In accordance to an aspect, each hardware node is configured as processing node and each hardware node configured as communication node is configured, in case no configuration data are downloaded in a current non-operative phase, to select between:
performing a reconfiguration using the enumerated configuration data which are in the next enumerated memory segment according to the predetermined sequence; and
performing a re-initialization without a reconfiguration.

In accordance with any of the preceding aspects, at least one processing node is configured or configurable as input/output, I/O, node as a particular case of a processing node, so as to be configured to:
receive a non-CTBV input from a non-CTBV input connection, convert the non-CTBV input onto a CTBV signal, and transmit the converted CTBV signal to a hard-wired connection, and/or
receive a CTBV signal from a hard-wired connection, convert the CTBV signal onto a non-CTBV signal, and transmit the converted non-CTBV signal to a non-CTBV connection.

In accordance to an aspect, the system may be configured for implementing a spiking neural network, SNN, the SNN comprising a plurality of neurons, at least one neuron of the plurality of neurons being configured to have runtime configurable parameter(s) and being configured to output at least one CTBV signal processed as determined by the runtime configurable parameter(s), the SNN including a plurality of synapses between the neurons, each synapse of the plurality of synapses being configured to provide an input signal to a neuron, the signal being provided by an output signal of the same or another neuron,
wherein at least one neuron of the plurality of neurons is implemented in one unique processing node of the plurality of processing nodes, and at least one synapse is implemented in a respective point-to-point(s) communication path of the plurality of point-to-point(s) communication paths, CTBV signals being transmitted by each processing node to encode the values outputted by the neurons.

According to an aspect, there is provided a configuration device for controlling the semiconductor device system of any of the preceding aspects, configured to
command a transmission of a configuration download command to the plurality of hardware nodes;
transmit configuration data in a subsequent configuration download phase to at least one hardware node, configured as processing node or configured as communication node, which has entered the configuration download phase.

According to an aspect, the confirmation device is configured to control the semiconductor device system of a previous aspect, further configured to assign, to each individual neuron or a plurality of neurons, one hardware node configured as processing node, and to each synapse, one point-to-point(s) communication path, the configuration device being configured to provide, to each hardware node configured as processing node, runtime configurable parameter(s) as part of the configuration data, and, to each hardware node configured as communication node, configuration data to switch the latency-deterministic circuitry to perform connections between hard-wired connections so as to instantiate a point-to-point(s) communication path instantiation a synapse.

In accordance to an aspect, the semiconductor device is configured to perform at least one training session, during which different outputs signals are examined for different input signals and different runtime configurable parameter(s), the configuration device being configured to evaluate the input and output signals and runtime configurable parameter(s) according to a given cost function and optimizing the runtime configurable parameters so as to minimize the cost function.

In accordance to an aspect, there is provided a method for a semiconductor device system comprising a plurality of hardware nodes implemented in application-specific integrated circuit, ASIC, the hardware nodes being mutually interconnected with each other through a plurality of hard-wired connections which support the transmissions of globally asynchronous continuous-time binary value, CTBV, signals, in such a way that each hard-wired connection supports the propagation of one unique CTBV signal from one transmitting hardware node connected to the hard-wired connection to at least one receiving hardware node connected to the hard-wired connection, so as to define at least one point-to-point(s) communication path between at least two hardware nodes, configured as processing nodes, along a sequence of hard-wired connections connected to each other through at least one switching circuitry,
the method comprising:
downloading, by the hardware nodes of the plurality of hardware nodes, configuration data through a package-switched configuration communication path;
by the hardware nodes configured as processing nodes, processing, transmitting and/or receiving CTBV signals according to the downloaded configuration data; and
by at least one hardware node configured as communication node, based on the downloaded configuration data selectably connecting, by at least one latency-deterministic switching circuitry controlled by the at least one hardware node configured as communication node, at least two hard-wired connections in the sequence of hard-wired connections, thereby permitting the transmission of CTBV signals along the sequence of hard-wired connections.

In accordance to an aspect, there is provided a method for controlling the semiconductor device system of a previous aspect, comprising:
commanding a transmission of a configuration download command to the plurality of hardware nodes;
transmitting configuration data in a subsequent configuration download phase to at least one hardware node, configured as processing node or configured as communication node, which has entered the configuration download phase.

In accordance to an aspect, there is provided a non-transitory storage unit storing instruction which, when executed by a processor, cause the processor to perform the method of a previous aspect.

### Figures

Fig. 1 shows an example of a semiconductor device system.
Figs. 2a and 2b show different phases sequentially entered by hardware devices of the example of Fig. 1.
Fig. 3 shows the operations in one transition phase of Fig. 2a.
Fig. 4 shows two hardware devices of the example of Fig. 1.
Fig. 5 shows an example of semiconductor device system (e.g. that of Fig 1) connected to a further semiconductor device.
Figs. 6 shows different path configurations.
Figs. 7a and 7b show operations in the semiconductor device system.
Figs. 8a-8c shows different path configurations.

### Examples

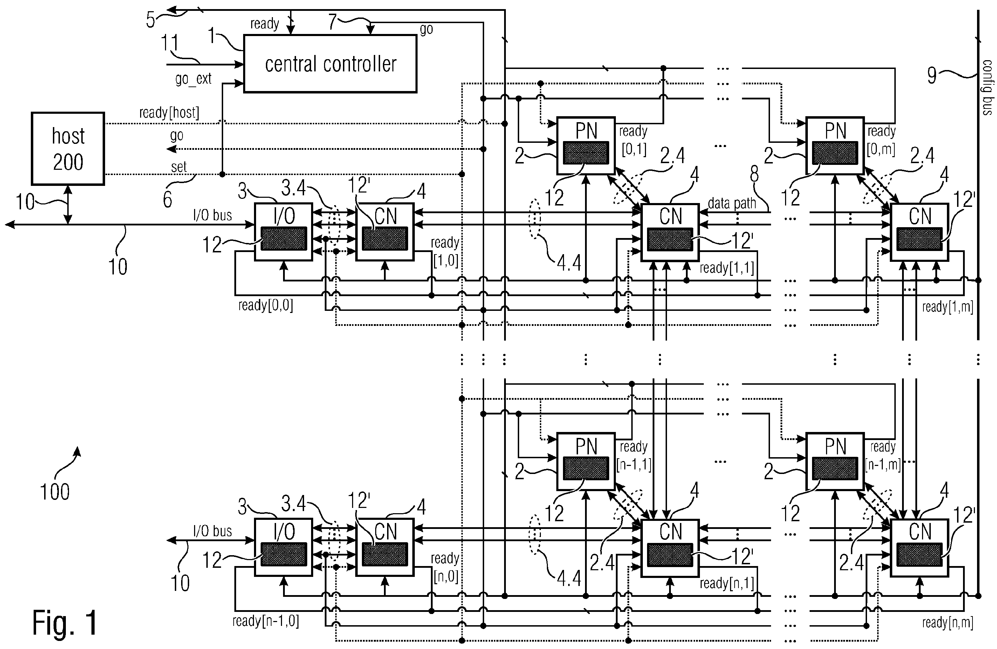

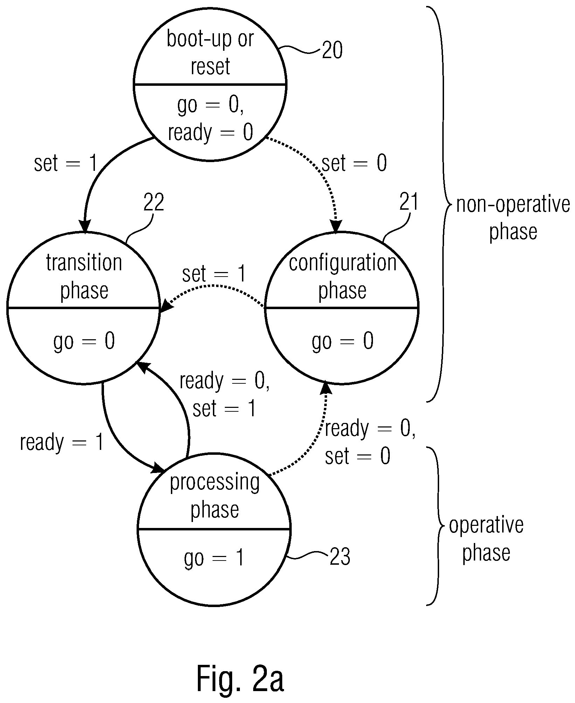

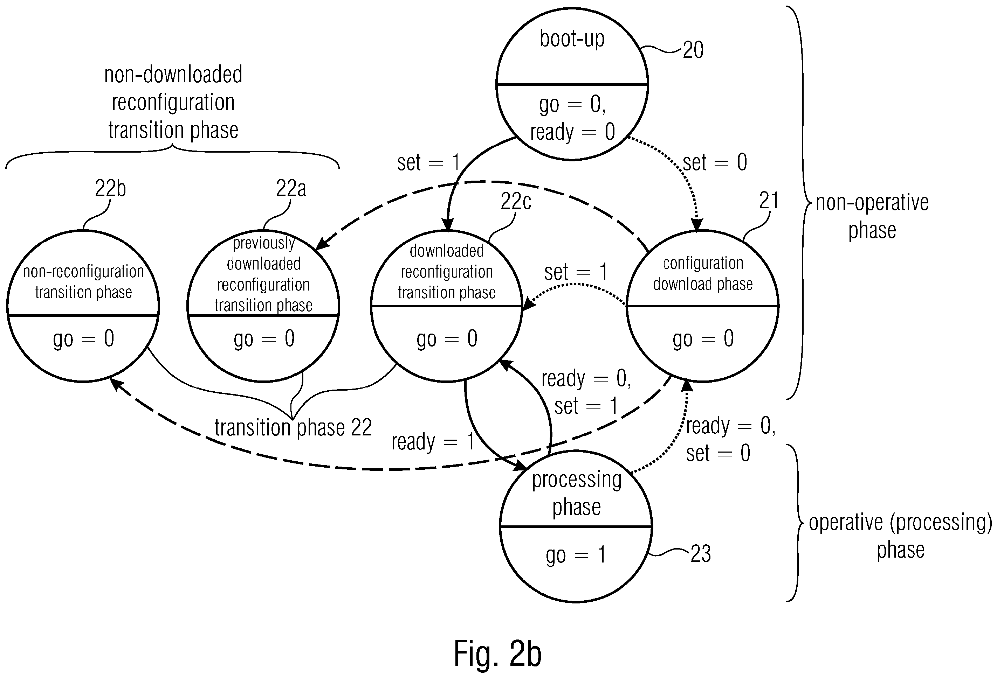

Figs. 1-4 show a semiconductor device system 100 according to an example. The semiconductor device system 100 comprises a central controller 1 and a plurality of hardware nodes 2, 3, 4 implemented in an application-specific integrated circuit(s) (ASIC). The central controller 1 and the hardware nodes 2, 3, 4 are, therefore, part of the same semiconductor device in one single piece, and they can be manufactured together by adequately doping different layers of semiconductors in different regions, e.g. as circuits integrated in the same chip. The semiconductor device system 100 may be configured to include latency-deterministic hard-wired connections between two different hardware nodes 2, 3, 4. Figs. 1 and 2 show latency-deterministic hard-wired connections 2.4 and 4.4. Each latency-deterministic hard-wired connection (e.g. 2.4, 3.4, 4.4) supports the propagation (or more in general transmission) of one single CTBV signal. Therefore, if multiple CTBV signals are to be simultaneously transmitted between two hardware nodes (e.g. 2, 3, 4), then multiple latency-deterministic hard-wired connections are to be used. E.g. two electric signals are independently transmitted through two latency-deterministic hard-wired connections, e.g. implemented by two separate conductors:
a first hard-wired connection propagating a first CTBV signal from a first CTBV output pin of the transmitting hardware node towards a first CTBV input pin of the receiving hardware node while, simultaneously and independently, a second hard-wired connection propagating a second CTBV signal from a second CTBV output pin of the transmitting hardware node towards a second CTBV input pin of the receiving hardware node; or
a first hard-wired connection propagating a first CTBV signal from a CTBV output pin of a first hardware node towards a CTBV input pin of a second hardware node while, simultaneously and independently, a second hard-wired connection propagates a second CTBV signal from an CTBV output pin of the second hardware node towards an input pin of the first hardware node, or
a first hard-wired connection propagating a first CTBV signal from a first CTBV output pin of a first hardware node towards a CTBV input pin of a second hardware node while, simultaneously and independently, a second hard-wired connection propagates a second CTBV signal from a second CTBV output pin of the first hardware node towards a CTBV input pin of a third hardware node.

Each pin (e.g. input/output pin) of the input/output port of each hardware node may therefore be connected to one single hard-wired connection (e.g. 2.4, 3.4, 4.4) to support the transmission of one single CTBV signal, while the input/output port can be connected to a plurality of hard-wired connections (e.g. 2.4, 3.4, 4.4), so as to support the transmission of a plurality of CTBV signals (one for each hard-wired connection). The propagation of the CTBV signals along the hard-wired connections is deterministic, and permits to guarantee the absence of unwanted unexpected delays. In particular, the hard-wired connections are in general not electrically in contact and/or physically interfering with each other. In general, each hard-wired connection (e.g. 2.4, 3.4, 4.4) may fixedly connect (e.g. electrically) two different hardware nodes (or, if an hard-wired connection connects more than two hardware nodes with each other, then there is defined one single transmitting hardware node, and the remaining hardware nodes are receiving hardware nodes). Therefore, each hard-wired connection (e.g. 2.4, 3.4, 4.4) represents a node-to-node connection between one transmitting and at least one receiving node (e.g. in proximity to each other). Each hard-wired connection may be, for example, an electrically conductive line, or an electrically conductive via, or a sequence of electrically conductive line(s) and/or conductive via(s), substantially of conductive nature, e.g. with known resistivity. Each hard-wired connection is connected, at one side, to one single pin of a first hardware node, and, at the other side, at least one pin of at least one second hardware node.

It will be shown that, in supporting the transmission of each of the CTBV signals, there is in general defined a point-to-point(s) communication path, formed by a sequence of hard-wired connections (e.g. 2.4, 3.4, 4.4) and other latency-deterministic circuitry such as selectable switching circuitry (e.g. 12'), which is controlled by hardware nodes configured as communication nodes 4. In general terms, the notation 2.4, 3.4, 4.4 simply distinguishes the hard-wired connections only based on the type of hardware nodes (2, 3, or 4) which are mutually connected, but the hard-wired connection(s) 2.4 are not necessarily physically distinguished from the hard-wired connection(s) 3.4, and the hard-wired connection(s) 4.4.

Each hardware node may operate according to a particular task. In the following, the following configurations are distinguished:
1) processing node, in turn distinguishing between
   a. primary node 2, which can receive CTBV signals, process them, and transmit CTBV signals based on the processed CTBV signals, and also possibly based on configuration data (in the context of the SNNs, the primary node may implement at least one neuron, and the output CTBV signals may be the neurons' output signals obtained by processing the input signals based on runtime configurable parameter(s), such as weights etc., the runtime configurable parameter(s) being, for example, received by the primary node as configuration data downloaded by the primary node 2)
   b. an I/O node (connected to an external non-CTBV connection 10) which may be:
      i. an input node, which can receive at least one non-CTBV input, convert it (in case, after some processing) onto at least one CTBV signal, and transmit it towards a processing node (the input node may obtain, for example, an input to be processed, such as an input from a user interface to be provided to the SNN); the conversion may follow the configuration data downloaded by the input node
      ii. an output node, which can receive at least one CTBV input, convert it (in case, after some processing) onto at least one non-CTBV signal, so as to provide the output e.g. to higher layer (the output node may obtain, for example, the result of the SNN to be provided to a user interface); the conversion may follow the configuration data downloaded by the input node
      iii. both an input and output node, operating as an input node for the inputs and as an output port for the outputs
2) communication node 4, which permits the transmission (propagation) of each received CTBV signal along a specific point-to-point(s) communication path through latency-deterministic circuitry (e.g. 12') controlled by the communication node 4 (e.g., the communication node 4 controls switching between electric connections so as to selectably connect different hard-wired connections to each other, and to therefore contribute to the propagation of the CTBV signal from one transmitting processing node towards at least one receiving hardware node (which may be another communication node, or a processing node) (in the context of SNNs, communication nodes contribute to the definition of synapses between different neurons, while a neuron's outgoing synapses are in general each constituted by a point-to-point(s) communication path from one transmitting processing node to one receiving processing node, e.g. each with an associated weight parameter implemented within the respective receiving processing node, the point-to-point(s) communication path being in general instantiated by a sequence of hard-wired connections with, interposed therewith, selected circuitries, such as switches, each being controlled by a respective communication node, e.g. on the basis of configuration data downloaded by the communication node; each synapse is therefore constituted by selectively connecting the hard-wired connections though the configuration data provided to one or multiple communication nodes); each latency-deterministic circuitry may be e.g. obtained through asynchronous combinatory logic.

It will be shown that there is the possibility that at least one hardware node may be either:
1) uniquely configured to perform a specific task (e.g., processing node, such as primary node or I/O node, and/or communication node) (while the configuration data are downloaded not for changing the task, but for defining its properties, e.g., the switched connections, or runtime configurable parameter(s) to be used e.g. for implementing a SNN, etc.)
2) selectively configurable to perform a specific task (e.g., processing node, such as primary node or I/O node, and/or communication node), the configuration being selected e.g. by configuration data (for example, a core may be downloaded as part of the configuration data, and/or the definition of specific connections between switching terminals may be downloaded as part of the configuration data, e.g. for a communication node).

In some examples, there are only hardware nodes uniquely configured to perform specific tasks (e.g., a processing node natively uniquely devoted to operate as a processing node, and/or a communication node natively uniquely devoted to operate as a communication node). In some other examples, there are only hardware nodes selectively configurable to perform specific tasks (e.g., a hardware node operating, according to a first configuration, as a processing node, and, according to a second configuration, as a communication node, and maybe, in a third configuration, as both processing node and communication node). In other examples, at least one hardware node is uniquely configured to perform specific tasks, while at least one other hardware node is selectively configurable to perform a specific task. A hardware node may be configured (e.g. uniquely configured, or configurable) as being both a processing node and a communication node (e.g., in different terminals).

At least one hardware node of the plurality of hardware nodes may be selectably configured between:
being a processing node (2, 3) transmitting and/or receiving at least one CTBV signal through at least one latency-deterministic hard-wired connection; and
being a communication node (4) controlling a latency-deterministic circuitry 12' (e.g. including at least one first switching circuitry terminal connected to at least one first latency-deterministic hard-wired connection and at least one second switching terminal connected to at least one second latency-deterministic hard-wired connection, so as to permit the transmission of the a respective CTBV signal through the two terminals).

It is also possible that a node both acts as a processing node and as a communication node, since while processing, transmitting and/or receiving at least one CTBV signal, the hardware node also permits a latency-deterministic transmission of another signal.

Between two arbitrary processing nodes, there is defined a point-to-point(s) communication path. Each point-to-point(s) communication path is constituted by a sequence of latency-deterministic hard-wired connections connected to each other through switching circuitries of communication nodes. Accordingly, each point-to-point(s) communication path is also latency-deterministic, by virtue of it being constituted only by latency-deterministic elements. It will also be shown that, while the latency-deterministic hard-wired connections are in general fixed and cannot be changed, the point-to-point(s) communication path can generally be varied by opportunely selecting communication nodes, alternated with latency-deterministic hard-wired connections, to form a chain between two arbitrary processing nodes. Therefore, according to the particular application, which will have to be carried out (e.g., an SNN, see below), it will always be guaranteed that the delays caused by the hard-wired connections and the switching circuitries are determined only by their hardware implementation and configuration, but not by the contents of the data being processed.

The switching circuitry 12' is therefore latency-deterministic. The switching circuitry 12' can delay the propagation of the CTBV signal based on the hardware configuration of the switching circuitry (12'), but not on any of the CTBV signal(s) inputted to the switching circuitry (12').

This may be achieved, for example, by implementing the switching circuitry as an asynchronous combinatorial circuit. In particular, the asynchronous property, which does not rely on a clock signal, permits to avoid quantization latencies, which would be undetermined. The combinatorial property, which causes immediate responses to the inputs, is also appropriate for avoiding undetermined delays.

In addition or alternatively, the switching circuitry 12' may be an electrically passive element, in particular constituted by elements (e.g. dipolar elements, such as resistors, conductors, capacitors, inductors...).

At least one switch may be a programmable switch (e.g. memristive devices, floating gate transistors; etc.), and may be programmed by the communication node 4 (e.g. by the configuration memory 420) following the configuration data. In addition or alternative, at least one switch may be a dynamic switch, and may be dynamically controlled by the communication node 4 (e.g. by the configuration memory 420) which is outside the switching circuitry 12'. In the operative phase 23 the configuration data notwithstanding control the dynamic switch to maintain a latency-deterministic behavior, thereby avoiding switching at undetermined time instants.

By being combinatorial, the switching circuitry 12' is therefore considered a queueless circuitry: there is no queue between different CTBV signals simultaneously propagating through the same switching circuitry 12'. By the same coin, the switching circuitry 12' is therefore considered an arbitrationless circuitry: there is no competition, between different CTBV signals simultaneously propagating through the same switching circuitry 12', to gain access to a same resource.

The switching circuitry 12' is also defined to avoid any combination between different CTBV signals simultaneously propagating through the same switching circuitry 12': therefore, parallel resources are provided for different CTBV signals propagating simultaneously.

By being latency deterministic, the switching circuitry 12' may be analogic, without digitalizing the CTBV signal.

It is shown that a hardware node configured as processing node is considered to have a processing core 12 (e.g., defined by configuration data), while a hardware node configured as a communication node is considered to have a switching circuitry 12' (e.g., switch box) which plays the same role of the processing core 12, but which has the property of permitting the propagation through the switching circuitry terminals of the CTBV signals transmitted by the processing nodes.

In the following discussion it is mostly referred to "processing nodes" ("I/O nodes", "primary nodes") and "communication nodes" without distinguishing whether they are natively dedicated to their task or whether they are configurable hardware nodes which have been configured as processing nodes (I/O nodes, primary nodes) or configured as communication nodes only by virtue of the downloaded configuration data. Hence, most of the following description mostly refers to any of those hardware nodes, without distinction (unless statements to the contrary).

The semiconductor device system 100 comprise the central controller 1. The central controller 1 may be natively and fixedly part of the semiconductor device system 100, obtained by adequately doping different layers of semiconductors in different regions, e.g. as circuits integrated in the same chip, together with the hardware nodes. The semiconductor device system 100 may comprise a host 200, or an external host 200 may be connected to the semiconductor device system 100. In the case the host is part of the semiconductor device system 100, it may be natively and fixedly part of the semiconductor device system 100, obtained by adequately doping different layers of semiconductors in different regions, e.g. as circuits integrated in the same chip, together with the hardware nodes and/or the central controller 1. Otherwise, the host 200 can be an external device connected through connection port(s). The central controller 1 and the host 200 may be, in some example, the same hardware component, but in other examples, they may be different hardware components. In general terms, the central controller 1 may operate as a master device and may provide synchronism (e.g. through a "go_ext" command 11) among the hardware nodes, while the host 200 may operate as a configuration device which configures the hardware nodes. It will be shown that the central controller 1, the host 200, and the hardware nodes may operate in time-multiplexed fashion, according to which operative phases (during which CTBV signals are exchanged) are alternated to non-operative phases (during which hardware nodes reconfigure and/or download the configuration data necessary for the reconfigurations). The central controller 1 may have the role of commanding the passages between the operative phase and non-operative phase (and vice versa), and/or the host 200 may have the role of commanding the passages into (and from) a configuration download phase (during which configuration data are downloaded, if present), and in at least one transition phase, during which the hardware nodes reconfigure and/or re-initialize. The central controller 1 and the host 200, when not being the same component, may therefore share synchronization information. For example, a "go_ext" command 11 may be sent from the host 200 to the central controller 1, so that, in some use modes, the central controller 1 is configured to send the "go" command (7) (see below) to the plurality of hardware nodes triggered by the "go_ext" command 11, instead of being triggered by the reception of the notifications of readiness to enter the operative phase (see below). The "go_ext" command 11 may use a dedicated conductive line.

Fig. 1 shows a system including a plurality of hardware nodes 2, 3, 4. For each processing node 2 and 3 there is shown a logic 12 (e.g., core), and for each communication node 4 there is indicated a switching circuitry 12'. Other features of the hardware nodes 2, 3, 4 will be explained later. Among the plurality of hardware nodes, a plurality of processing nodes 2 and 3 are provided. Among the processing nodes 2 and 3, there may be provided at least one output/input (I/O) node 3, which can output and/or receive data. Those hardware nodes indicated with reference numeral 2 are primary nodes (subset of the processing nodes). The processing nodes (e.g., primary nodes and/or I/O nodes) communicate with each other through CTBV signals. The CTBV signals are globally asynchronous continuous-time binary valued signals in which information is encoded in the timing of physical transitions of the CTBV signal (e.g., the duty-cycle, the frequency, the duration, the width and/or time instant of transmitted pulses). The CTBV signals are transmitted and received by the processing nodes 2 and 3 through a CTBV interconnection circuitry (data interface) indicated with 8. The CTBV interconnection circuitry 8 (formed by both the hard-wired connections and the connection circuitries 12', and therefore also the point-to-point(s) communication paths) supports the transmission of the CTBV signals along the point-to-point(s) communications (each CTBV signal being transmitted in a different path). The use of the wording "point-to-point(s)" (with the optional plural) is justified by the fact that one single hardware node (2 or 3), when transmitting, transmits one single CTBV signal to at least one (i.e. either one or more than one) receiving hardware node(s) 2, 3. Therefore, "point-to-point(s)" means that one single transmitting node can transmit either to one single receiving node or to multiple receiving nodes, and this is established by the particular path (e.g., the particular path could bifurcate towards two different receiving hardware nodes, or trifurcate towards three different receiving hardware nodes, etc. or it could simply go to only one receiving hardware node). Accordingly, there is performed one single transmission along one single communication path. It is also possible that a first, transmitting processing node transmits multiple CTBV signals to one or a plurality of second receiving node(s), and in that case, the different transmissions can be performed in different point-to-point paths, each connected through different connectors to the first, transmitting processing node and, through different connectors, to the corresponding second receiving node(s).

The interconnect circuitry 8 (formed by both the hard-wired connections and the connection circuitries 12', and therefore also the point-to-point(s) communication paths) is a circuit-switched implementation. Therefore, it is ensured that transmission paths never overlap. This makes possible to have deterministic and repeatable delays through the different point-to-point(s) communication paths, and to thus retain a high precision in the timing of the transmitted CTBV signals. Since the CTBV signals can encode different information with different (relative) timings, the fact that they are subjected to deterministic delays permits to increase information content and determinism in the communication, since the information encoded in the CTBV signals is subject to the same delays in different repetitions of the transmissions (in the same point-to-point(s) communication path).

In contrast to package-switched network-on-chip architectures, the circuit-switched interconnect circuitry also allows the point-to-point(s) transmission of individual bits (e.g., represented by high/low levels of physical values or by ascending or descending fronts in the physical values) without the need to transmit additional information such as address bits needed for dynamic routing of the signal. Since the point-to-point(s) communication paths do not overlap, no queues or arbitration circuits are needed within each point-to-point(s) transmission path. Notably, in the semiconductor device system 100 there are present package-switched communications, but they are not carried out for the CTBV transmissions, but for the download of the configuration data, i.e. for non-time-critical operations.

The CTBV interconnection circuitry 8 (formed by both the hard-wired connections and the connection circuitries 12') gives the possibility of changing from a first point-to-point(s) communication path to a second point-to-point(s) communication path. The semiconductor device system 100 therefore comprises at least one switching circuitry 12', which permits to deviate or in other ways switch from the first point-to-point(s) communication path to a secondary point-to-point(s) communication path. This switching circuitry 12' may include a plurality of switching circuitry input terminals (or more in general switching circuitry first terminals) and a plurality of switching circuitry output terminals (or more in general switching circuitry second terminals): each switching circuitry input terminal (or more in general switching circuitry first terminal) can be selectably switched to be connected to one or more switching circuitry output terminals (or more in general switching circuitry second terminal) of the same switching circuitry. For example, one first circuit input terminal (e.g. fixedly connected to a first point-to-point(s) communication path) may be selectably connected to a first switching circuitry output terminal (also connected to the same point-to-point(s) communication path) of the same switching circuitry 12' for a first operative phase and, after a different selection required by different configuration data, the first switching circuit input terminal may be deviated to be connected to a second switching circuitry output terminal, to form a point-to-point(s) communication path different from the previous one. By selectively switching between different circuitry input (or first) terminals and different switching circuitry output (or second) terminals in the same switching circuitry 12', there is selectively varied the different point-to-point(s) communication paths according to the necessities. For example:
in a first operative phase a transmitting processing node can send a CTBV signal to a first receiving processing node through a first point-to-point(s) communication path through which the CTBV signal latency-deterministically propagated, and
in a second subsequent operative phase and after a reconfiguration determined by the configuration data, the same transmitting processing node can send the CTBV signal to a second receiving processing node through a second point-to-point(s) communication path, through which the CTBV signal latency-deterministically propagates, simply by virtue of selection(s) operated by at least one communication node 4 onto the switching circuitry.

The switching circuitry 12' of at least one communication node 4 can be embodied by a switch box. Each switching circuitry 12' (e.g., switch box) may include active circuit elements and/or passive circuit elements and/or compositional logic, provided that the CTBV signals, while propagating through the switching circuitry 12', are only subjected to deterministic delays, thereby obtaining the latency-deterministic property. A switching circuitry 12' may include, for example, passive circuit elements. A switching circuitry 12' may include at least one active circuit element, e.g. relaying a received CTBV signal. A switching circuitry 12' may include compositional logic. In general terms, a switching circuitry 12' is construed in such a way it causes a deterministic delay between each input terminal and each output terminal.

According to one strategy to obtain the latency-deterministic property, each selected path between an input node to at least one output node in a switching circuitry controlled by a communication node transmits a rising or falling edge of a CTBV signal with a delay determined by the hardware implementation and current configuration of the switching circuitry, not the data (including the CTBV signal itself and any other CTBV signal passing through the communication node).

The conductors of the switching circuitry 12' and more in general, in case, the conductors of the communication paths, may be shielded (e.g., electrically shielded) to avoid negative effects of parasitic capacitances and other interferences.

The switching circuitry 12' is controlled by a respective communication node 4. As shown in Figs. 1 and 2, the switching circuitry 12' may be a component internal to the communication node 4. The communication node 4 may also be a processing node: the processing node can, for example, both control the switching circuitry 12' and also provide the transmission of CTBV signals along different paths (each of the paths could be external or pass through the switching circuitry 12'). In some cases, there is no hardware difference between the processing nodes and the communication nodes. However, in this case a processing node can be reprogrammed to become a communication node and/or vice versa (e.g., through different configuration data, as will be explained later).

As discussed above, there is a distinction between
1) The hard-wired connection, which is uniquely placed and fixed between two hardware nodes and can never be changed (each hard-wired connection being uniquely and fixedly connected to one single input pin of a first hardware node at one side, and uniquely and fixedly connected to one single output pin of a hardware node at the opposite side); and
2) The point-to-point(s) communication path, which is formed by a sequence of hard-wired connections interposed by communication nodes, and can be changed, by opportunely switching the switching circuitries by the communication node 4 based on the downloaded configuration data.

It is reminded that:
1) The hard-wired connection is latency deterministic, because it uniquely supports one single CTBV signal
2) The point-to-point(s) communication path is also latency deterministic, because:
   a. the hard-wired connections (which are latency deterministic)
   b. the switching circuitry, which is also latency deterministic.

Therefore, all positive or respectively all negative signal transitions in each CTBV signal are transmitted with latencies that are determined only by the implementation and configuration of the hardware nodes and hard-wired connections, but that do not depend on any of the CTBV signals being processed.

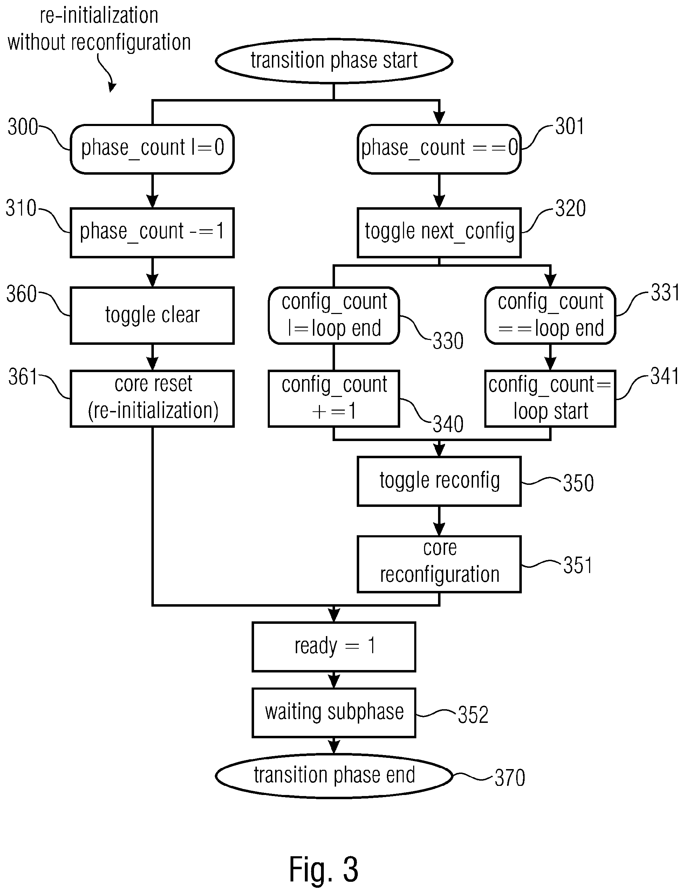

Later, it will be explained (e.g., with reference to Figs. 2 and 3) that at least two hardware nodes among the plurality of hardware nodes 2, 3, 4 may be synchronized. Each synchronizable hardware node may be synchronized to a global start command 7 (also called "go" signal). The global start command 7 may be a particular binary logical value transmitted in a dedicated point-to-points communication path, in which one single node (e.g. the central controller 1) may transmit to each of the plurality of hardware nodes. When this "go" signal 7 is transmitted, all the hardware nodes are triggered to operate according to a different phase. In particular, there are provided:
- an operative (processing) phase 23, in which the hardware node 2, 3, 4 is operative to receive CTBV signals and perform processing on received CTBV signals and/or to perform processing to obtain processed CTBV signals and to transmit them; and
- a non-operative (non-processing) phase (20, 21, 22, 22a, 22b), alternative to the operative (processing) phase 23, so that during the non-operative (non-processing) phase (21, 22, 22a, 22b) the hardware node performs a non-operative procedure (e.g. a reconfiguration and/or an initialization), e.g. refraining from transmitting and receiving CTBV signal and/or refraining from processings received CTBV signals and/or refraining from processing values to be transmitted as CTBV signals. The non-operative phase may include a waiting subphase 352 (shown in Fig. 3) during which e.g. no particular processing is performed.

The "go" signal 7 may therefore cause each hardware node to move from the operative phase to the non-operative phase, and a global "stop" command (which may be the inverse of the "go" signal 7) may cause each hardware node to move from the non-operative phase to the operative phase.

Basically, the global start command 7 may be embodied by a first value (e.g. a high value) meaning that each hardware node shall enter the operative phase from the non-operative phase, and the global stop command may be embodied by a second value (e.g., low value) meaning that each hardware node shall enter the non-operative phase from the operative phase. However, the global start command and the global stop command can be implemented in another way. Here below, it is often referred to the fact that the global start command is indicated with "go"=1 and the global stop command is indicted with "go"=0. Basically, the information distinguishing between the global stop command and the global start command may be encoded in one single bit, provided simultaneously to all the hardware nodes.

More in general terms, however, the plurality of hardware nodes 2, 3, 4 may operate synchronously between the operative phase and the non-operative phase. During the operative phase the hardware nodes exchange CTBV signals, and it is during the non-operative phase that the hardware nodes, instead of exchanging CTBV signals, will e.g. either reconfigure, or download configuration data (and subsequently reconfigure), or reinitialize, or (after having performed these operations) wait for the immediately subsequent operative phase to be triggered.

Each hardware node (whether processing node, such as primary node 2 or I/O node 3 or communication node 4) may also transmit a notification 5 signalling readiness to enter the operative phase (also called "ready" signal 5). The "ready" signal 5 may be transmitted (e.g., in a dedicated point-to-point communication path), to indicate that the particular hardware node is ready to enter the operative phase 23 after having performed the operations at one of the transition phases 22, 22a, 22b, which will be explained below. The global start command 7 ("go") may be triggered, at the central controller 1, only once the notification 5 signalling readiness to enter the operative phase 23 is being sent by the totality of the hardware nodes.

The central controller 1 may be the device which transmits the "go" signal 7 and/or receives the "ready" signal(s) 5. The central controller 1 may operate as a master device synchronizing the plurality of hardware nodes. In some examples, the central controller 1 may be embodied by one hardware node of the plurality of hardware nodes, while in other examples, the central controller 1 can be embodied by a distinct processing unit, which may be different from any of the hardware nodes 2, 3, 4. In some examples, the central controller may be superseded, e.g. in a particular operation mode ("step-mode", see also below), by the host 200, which therefore becomes the device which transmits the "go" signal 7 and/or receives the "ready" signal 5. Or, in some examples, the host 200 operates as a master, e.g. by providing the "go_ext" command 11, which commands the (e.g. unconditioned) transmission of the "go" signal 7 by the central controller 1, e.g. without receiving any "ready" signal 5 from the plurality of hardware nodes 2, 3, 4.

As explained above, each hardware node(s) is configured, so that different configuration data (e.g. different codes and/or different data) are downloaded in the hardware node 2, 3, 4, in different non-operative phases to differently condition the operations of the hardware node 2, 3, 4 in an immediately subsequent operative phase.

Each hardware node, when entering the non-operative phase may download configuration data (through the package-switched configuration communication path 9) and write the downloaded configuration data into a local configuration memory 420. It will be shown that, in some examples, it may be that no configuration data is downloaded by a particular hardware node, while, simultaneously another hardware node may receive configuration data. During the download of the configuration data, a hardware node 2, 3, 4 may download different configuration data adapted to different operative phases, and to store the different configuration data in different memory segments, using the different configuration data in subsequent reconfigurations, without performing new downloads. In yet other cases, the same reconfiguration will be used, but only a re-initialization will be performed. It will be subsequently shown that in some examples the non-operative phase may be divided among:
a configuration download phase, during which each hardware node downloads the configuration data (or wait for the download of the configuration data, if it is sent to it); and
at least one transition phase (which, for example, may be entered immediately after the configuration download phase), during which the reconfiguration or the re-initialization is performed.

In some examples, it is possible to distinguish between different transition phases, i.e. at least one of:
a downloaded reconfiguration transition phase 22c, which immediately follows the configuration download phase, and during which configuration data downloaded in the immediately preceding downloaded reconfiguration transition phase are used for reconfiguring the hardware node;
a previously-downloaded reconfiguration transition phase 22a, which immediately follows (or which substitutes) the configuration download phase, and during which the configuration data used for reconfiguring the hardware node are taken from previously downloaded configuration data; and
a non-reconfiguration transition phase 22b, in which only a re-initialization may be performed, but the same configuration data (previously used in the immediately preceding transition phase) are maintained.

Alternatively, it is possible to consider that the different transition phases are one single transition phase, in which different behaviors are taken in different cases. A discussion is provided below.

At the end of the at least one transition phase, each hardware node may transmit (to the central controller 1 and/or host 200) the "ready" signal 5, meaning that it is now ready to enter the operative phase. Meanwhile, the hardware node remains waiting for the reception of the "go" signal 7 in a status of reduced power consumption.

A more detailed discussion is provided here below. It is noted that the subdivision between the configuration download phase and the at least one transition phase can be skipped in some examples, but is here notwithstanding provided for clarity and completeness.

Each hardware node may enter the configuration download phase 21 (which may be a subphase of the non-operative phase). During the configuration download phase 21 (or more in general when downloading the configuration data) the hardware node, instead of transmitting and receiving CTBV signals, may either receive configuration data or be notwithstanding ready to receive them. The transmission of the configuration data may be carried out through a configuration communication circuitry 9 (e.g. configuration bus system) different from the CTBV interconnection circuitry 8. The configuration communication circuitry 9 may comprise, for example, a serial configuration bus 9. The communication circuitry 9 can therefore be serial and may be such that it does perform CTBV communications, or more in general may be a package-switch communication. The communication circuitry 9 may transmit data through a synchronized paradigm, such as a serial communication, or a parallel communication (e.g., with a transmission of a synchronized signal). In the configuration download phase, therefore, the configuration data are downloaded by at least one hardware node. The configuration data may include code to be executed and which may define the behavior of a processing core 12 for each hardware node. The processing core 12 may be implemented, e.g., in the processing nodes 2 and/or 3, from the configuration data. In the communication node 4, the configuration data downloaded by the hardware node (e.g. from the host 200) may command which switches are to be switched within the switching circuitry 12', e.g., how to connect the switching circuitry output (or second) terminals with the switching circuitry input (or first) terminals). It is to be noted that in particular the use of a serial bus for embodying the communication circuitry 9 (or more in general of the package-switched configuration communication path) permits to greatly reduce the hardware necessity for the different hardware nodes 2, 3, 4, e.g. in terms of resources, such as wiring. Therefore, the configuration communication circuitry 9 may follow a packet-switched paradigm.

The different configuration data may also change the operations of a hardware node, which can turn from a processing node into a communication node and/or vice versa. Basically, there may be a plurality of hardware nodes which may be reconfigured so that each becomes a processing node (or more in general a primary node or an I/O node) or a communication node, according to the necessities.

In general terms, for at least one (e.g. all) of the hardware node(s), configuration data may be downloaded onto a local configuration memory 420 (see also below) of the at least one hardware node. Each hardware node may be configured to enter the configuration download phase 21 triggered by the reception of a configuration command 6 (e.g., received from the host 200). Each hardware node may be configured to enter a transition phase (22) (e.g. downloaded reconfiguration transition phase 22c) at the end of the configuration download phase (21). Both the configuration download phase (21) and the transition phase (22) are subphases of the non-operative phase.

As explained above, the configuration data may be downloaded through the package-switched configuration communication path 9 (e.g. serial bus) which may be common to more than one hardware node of the plurality of hardware nodes, each configuration data being directed to a specific hardware node (e.g., through an address uniquely assigned to each hardware node).

Fig. 2a shows a separation between operative (processing) phase (during which the CTBV signals are transmitted) and the non-operative phase (during which there is no processing on the CTBV signals and/or there are no transmissions and receptions of the CTBV signals). As can be seen, a boot-up phase 20 may be the initial boot-up phase to be carried out at the power-on system (and more in particular, of the hardware nodes). The processing phase 23 is distinguished from the non-operative phase, which may have a plurality of subphases. For example, the configuration download phase 21 (during which one or more hardware nodes receive download configuration data), and at least one transition phase 22 (i.e. 22a, 22b, 22c). The downloaded reconfigured transition phase 22c may be triggered at the end of the configuration download phase 21. For example, as soon as a hardware node completes the download of the configuration data, the hardware node may enter the downloaded reconfiguration transition phase 22c, during which the downloaded configuration data may be used for performing a reconfiguration. The reconfiguration may imply, for example:
the use of the downloaded configuration data to set internal parameters of the core 12, to set a program code to be executed by the core 12, or to otherwise define the behavior of the core 12 (in the case the hardware node is to be configured as a processing node, such as a primary node or I/O node), and/or
the use of the downloaded data to reconfigure the switches in the switching circuitry 12' in a communication node (in the case the hardware node is to be reconfigured as a communication node).

As can be seen, the configuration download phase 21 may be initiated from the processing phase 23 when the "go" signal goes to 0 ("global stop command"), under the condition of the "set" signal being 0 (configuration download command), while the passage from the configuration download phase 21 to the downloaded reconfiguration transition phase 22 may be triggered by the reception of the "set"=1 (transition command 6).

Among the plurality of hardware nodes, it is possible that not all of them are subjected to the download of configuration data. Accordingly, these hardware nodes may either avoid the configuration download phase 21 or remain waiting (without downloading any configuration data) during the configuration download phase (while other hardware nodes download their own configuration data), thereby saving power. In these examples, the hardware nodes may in this case simply perform a reconfiguration based on reconfiguration data previously downloaded (in this case, it is possible for the hardware node to enter a "previously-downloaded reconfiguration transition phase 22a"). In this case, the hardware node may simply make use of different configuration data previously downloaded in a previous configuration download phase 21. It will be explained that, for example, the local configuration memory 420 of the at least one of the hardware node(s) may be segmented according to a plurality of memory segments, enumerated according to a predetermined sequence (so that subsequent reconfigurations are performed using the subsequent memory segments). It is possible that different processing phases necessitate different configurations that are, notwithstanding, stored in one single configuration download phase 21 (e.g. in different memory segments of the same configuration memory 420). Accordingly, it is possible to reduce the number of downloads for each hardware node, thereby reducing the power consumptions and increasing the speed of the downloads.

In some cases, it may be that a hardware node does not necessarily need a reconfiguration. For example, in some cases, the previous configuration data may be maintained also for the next processing phase (this may be the case of entering the non-reconfiguration transition phase 22b).

It can be understood that the distinction between initiating the configuration download 21 and initiating the transition phase 22 may be carried out based on a condition of a signal (e.g. by the presence of the configuration download command from the "set" signal).

The distinction between triggering the transition phases 22a, 22b, 22c, can be made by the internal status of each hardware node (which in turn may be conditioned by the configuration data previously downloaded by the hardware node), or by choice of the host 200. In the internal status of the hardware node there may be comprised the value of some predetermined registers.

For example, a two-program-counter strategy may be performed. For example, the hardware node may be configured so that there are more re-initializations without reconfigurations than reconfigurations. This may be obtained, for example, by using registers and/or counters, e.g. in the strategy discussed below.

In general terms, the configuration data may provide information on the future phases to be subsequently used (e.g. code to be executed, and/or other data to be used, such as runtime configurable parameter(s) to be used, see also below), so that it is pre-determined for each hardware node whether to enter the configuration download phase 21 (and subsequently the downloaded reconfiguration transition phase 22), the previously downloaded reconfiguration transition phase 22a or the non-reconfiguration transition phase 22b next.

After the boot-up 20 at least one hardware node may either enter the configuration download phase 21 (in case of "set"=0) or the downloaded reconfiguration transition phase (in case of "set"=1), the downloaded reconfiguration being the previously downloaded reconfiguration (which may be the full configuration).

In general terms, the difference between the three behaviors of each hardware node may be:
- In the case of the hardware device downloading the configuration data (e.g. in the configuration download phase), a complete reconfiguration may be carried out (e.g. at the transition phase, e.g. at the downloaded reconfiguration transition phase). For example, the core 12 may be completely reprogrammed, to the point that, for example, a primary node may become an I/O node or a communication node, or vice versa. In the last part of the downloaded reconfiguration transition phase, the hardware node may remain waiting (at 352), thereby reducing power consumption.
- In the case that the hardware node does not download configuration data but reconfigures using previously downloaded configuration data (e.g. in the case of entering the previously-downloaded reconfiguration transition phase 22a), energy and communication bandwidth is saved by not downloading any new configuration data.
- In case of re-initialization without reconfiguration (e.g. in the case of the non-reconfiguration transition phase 22b) there is no reconfiguration, i.e. no changes are made to previously-downloaded and/or currently used configuration data, and no new configuration data is downloaded. During re-initialization, a hardware node may modify its internal dynamic state (e.g. by resetting internal variables to constant values and/or by incrementing and/or by decrementing the values of internal variables), which may be e.g. stored in some internal registers or other memory, and which must be distinct from the memory or memory address range used to store configuration data. For example, the core 12 does not change and/or the switching circuitry 12' is not changed. Further, the hardware node remains the same (e.g. the primary node remains the same primary node; an I/O node remains the same I/O node, and a communication node remains the same communication node). In this case, fewer memory accesses may be needed, allowing the hardware node to go even quicker to the waiting subphase 352, thus saving even more energy.

Several strategies can be used to further reduce the power consumption. For example, the configuration memory 420 (see below) may be of the static type (e.g., avoiding the necessity of refreshing). The configuration memory 420 may be, for example, implemented in a flash memory or in another memory that is not transitable (non-volatile memory) and which does not continuously necessitate the provision of electric power. In general terms, the fewer operations are need to be performed to complete the reconfiguration of the hardware (and the quicker the node starts waiting at 352), the more the energy saving is achieved. The same may apply, for example, to the core 12 and/or the switching circuitry 12'.

In general terms, it may be that the various hardware nodes 2, 3, 4 of the semiconductor device system 100 do not receive a central clock signal. This permits to substantially reduce the power consumption. However, it is possible that at least one of the hardware nodes (e.g., processing node such as primary nodes or I/O node or communication node) has, internally, its own clock or receives an external clock signal. It is also possible that two or more hardware nodes (e.g. in the vicinity with each other) share a clock signal. In general terms, however, the hardware nodes of the semiconductor device system 100 do not need to share a clock altogether.

Moreover, another advantage of the present solution is that all the hardware nodes are transparently and easily reconfigurable, with clearly separated and synchronized reconfiguration phases that do not interfere with the continual asynchronous processing of CTBV signals.

The architecture is also scalable, because it is possible to connect and reconnect different hardware nodes in different fashions according to different designs, and reconfigure them any time in a time-multiplexed fashion.

Moreover, determinism is increased, and the CTBV transmissions are always impaired by the same latency, when propagating along the same point-to-point(s) communication path.

In the above discussion, it is mostly imagined that the set signal can be set high or low at any time. The presence of a device (e.g. host 200) that sets the "set" command to high or low can (thereby controlling the configuration download command) also be avoided when the semiconductor device system 100 is marked, in the cases in which the semiconductor device system 100 does not need any reconfiguration anymore.

In some cases, the set signal and the configuration data may be transmitted from the host 200, which may be not the central controller 1, and which could be or not be part of the final marketed device. Notwithstanding, the semiconductor device system 100 can also be operated without a host 200, e.g. if no reconfiguration is needed. In those cases, it may be that the signal set is always set high (to 1) and the configuration download phase 21 and the download reconfiguration transition phase 22 never occur when the semiconductor device system 100 is operative. It is also possible that the host (transmitting the set signal and/or the configuration data to be downloaded) can be either the central controller 1 (or part of the controller 1) or another device internal to the semiconductor device system 100.

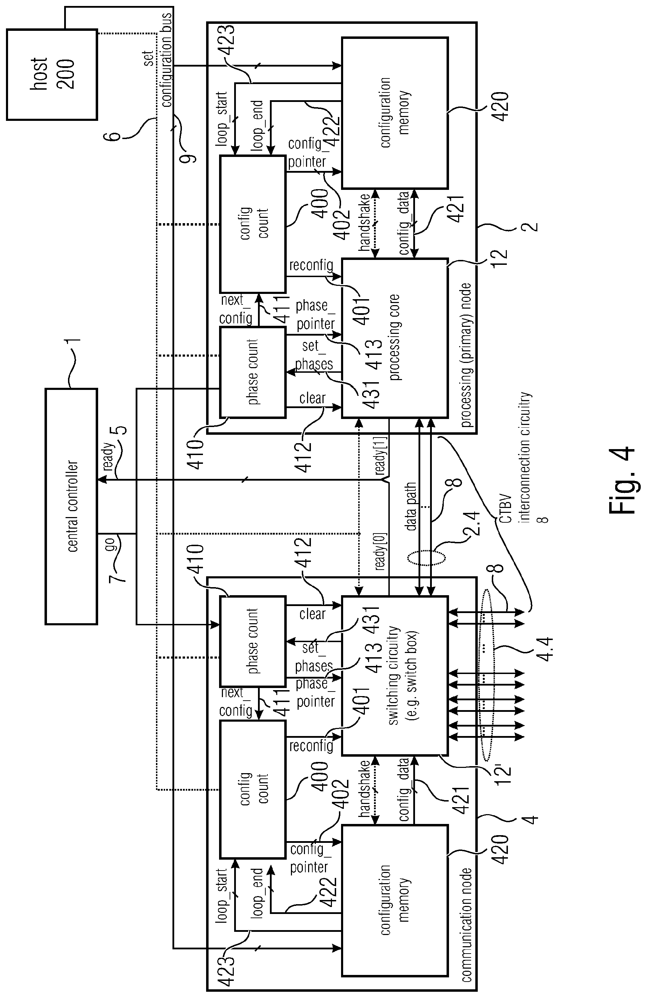

Fig. 4 shows an example of two hardware nodes (which may be nodes shown in Fig. 1). A processing (primary) node is indicated with reference number 2. A communication node 4 is indicated with reference number 4. In this case, the hardware nodes 2 and 4 are mostly the same for most of the hardware, but it is not strictly necessary. It is possible that they are different hardware, in variants. On the other side, the only difference between the two hardware nodes 2 and 4, apart from their external interconnections, may be that the communication node 4 includes a switchbox 12' (or more in general a switching circuitry 12') with a plurality of input terminals and a plurality of output terminals that can be selectively switched to generate communication paths, while the processing node has a processing core 12 (which could be, for example, a mixed-signal circuit 12, an asynchronous digital circuit 12 or a compositional or sequential logic circuit 12). The CTBV interconnection circuitry 8 (data paths) is also shown to connect the two hardware nodes 2 and 4 (while other hardware nodes are connected by the switching circuitry 12' which are not shown in Fig. 4). Both hardware nodes 2 and 4 are also synchronizable, and can receive the "go" signal (7) to trigger them to start operating in the processing (operative) phase 23 from the non-operative phase (transition phase 22, or one phases 22c, 22a, 22b). Each of the hardware nodes 2 and 4 may be configured to transmit a "ready" signal indicating readiness to enter the operative phase 23 or vice versa the non-operative phase (e.g., one of the phases 21 and 22). As shown in Fig. 4, each "ready" signal (5) is transmitted point-to-point from each of the communication nodes 2 and 4 to the central controller 1. This is the meaning of "ready[0]" and "ready[1]", which refer to two different binary signals transmitted through two parallel paths (which are both point-to-point). As can be seen, both the hardware nodes 2 and 4 are also reconfigurable, since they can receive the "set" signal 6. In this case, the "set" signal 6 may be transmitted from the host 200, but it could also be transmitted by the central controller 1 in other cases. A configuration communication circuitry 9 (e.g., serial bus) may be configured to connect the host controller 200 for serially transmitting data (or through other communication paradigms different from the CTBV) towards each of the hardware nodes 2 and 4, which are therefore reconfigurable hardware nodes. Each of the hardware nodes 2 and 4 may have a configuration memory 420, which may store configuration data to be used for reconfiguring each hardware node 2 and 4. Therefore, each hardware node 2 and 4 may download the configuration data through the configuration communication circuitry 9 and write the downloaded configuration data into the respective local configuration memory 420. In the subsequent downloaded configuration transition phase 22 (e.g. in the case of the instantiation 22a or 22b), at least part of the previously downloaded configuration data are used to perform a reconfiguration of the respective hardware node 2, 4.

In case, e.g., of the previously downloaded reconfiguration transition phase 22a, the configuration data are not downloaded, but previously downloaded configuration data (already stored in the configuration memory 420) may be used for performing a new reconfiguration. In case a non-reconfiguration transition phase 22b is entered, the same configuration used in the immediately preceding reconfiguration is used without even performing a reconfiguration; simply some registers or internal buffers are re-initialized and potentially some internal counters are updated.

The operations of reconfigurations (which are based on the configuration data) stored in the configuration memory 420 of the communication node 4 may include, for example, instructions on how to switch the switching circuitry (e.g., which switching circuitry input terminal is to be connected to which switching circuit output terminal(s) for each of the plurality of switching circuits input and output terminals); on the other side, in the processing node (e.g., the primary node 2, but it could also be the same for the I/O node 3) the configuration memory 420 may cause, when a configuration is performed, a redefinition of the processing core 12. On the other side, the configuration data may have code which is to be executed by a processor implemented in and/or embodying the processing core 12.

The configuration memory 420 may include a plurality of memory segments, e.g. enumerated according to a predetermined sequence. This can permit, for subsequent occurrences of the transition phase (e.g. in the case of the previously downloaded reconfiguration transition phase 22a), to make use of previously-downloaded configuration data currently stored in subsequent memory segments of the configuration memory 420. In fact, it is possible to store configuration data regarding different reconfigurations in different (e.g., subsequent) memory segments of the configuration memory 420. Accordingly, each time a new transition phase (e.g., in the case of a previously-downloaded reconfiguration transition phase 22a) is entered, a new memory segment (e.g., the next memory segment in the predetermined sequence) is used for performing the reconfiguration. Therefore, during a single configuration download phase 21 (or more in general during one single download), multiple memory segments of the same configuration memory 420 of the same communication node (2 and/or 4) may be written with different configuration data. Accordingly, the first memory segment as enumerated according to the sequential numeration is written with the configuration data pertaining to the first reconfiguration to be performed in the downloaded reconfiguration phase 22 immediately following the download, while the subsequent memory segment are written, according to the predetermined sequence, with the configuration data pertaining to the subsequent reconfigurations to be performed in the subsequent occurrences of the subsequent transition phases (e.g. in the previously downloaded reconfiguration transition phases 22a).

With reference to Figs. 3 and 4 at least one hardware node may include a phase counter register 410 and a configuration counter register 400, so that:
the phase counter register 410 (phase_count) counts (310) the number of consecutive occurrences of the re-initializations (361) without reconfiguration, from a phase counter initial value to a phase counter threshold (in the case of Fig. 3, the phase_count counts backward from an initial value larger than 0 towards the threshold, which is 0), and
the configuration counter register 400 (config_count) points (340, 341) at the enumerated memory segment to be used for the next reconfiguration (351),
so that:
   while the phase counter register 410 (phase_count) does not reach the phase counter threshold (i.e., while condition 300 is verified and condition 301 is not verified), a re-initialization (361) without reconfiguration is performed; and
   in case the phase counter register 410 (phase_count) reaches the phase counter threshold (i.e., when condition 300 is not verified anymore and condition 301 is verified), the configuration data stored in the enumerated memory segment pointed by the configuration counter register are used for the next reconfiguration, (351) the configuration counter register being updated. As part of the following reconfiguration, the phase counter register 410 may or may not be set to a new value.

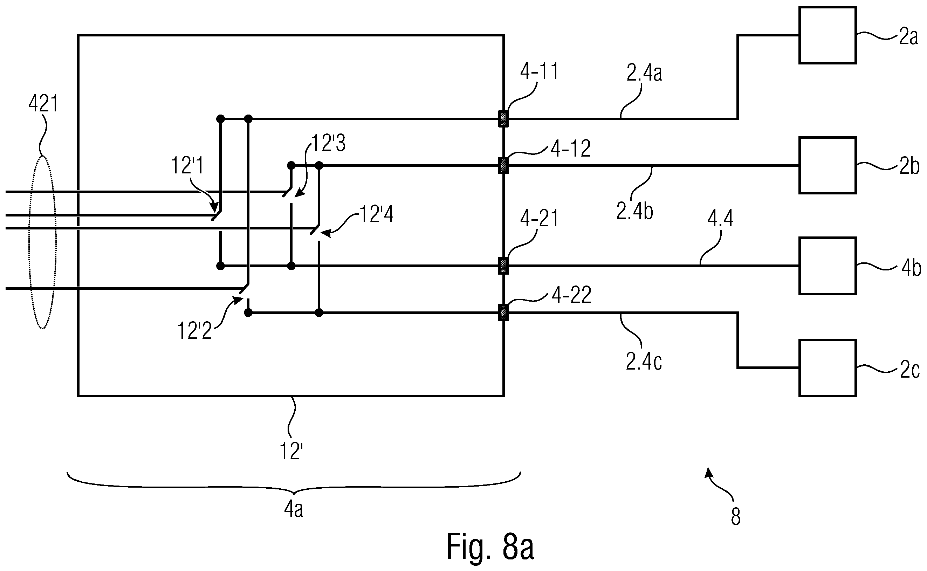

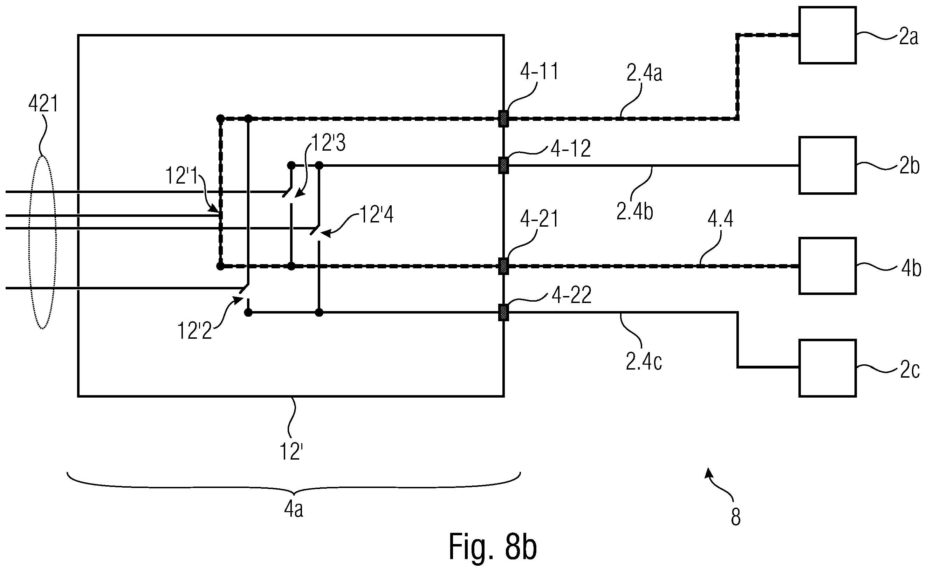

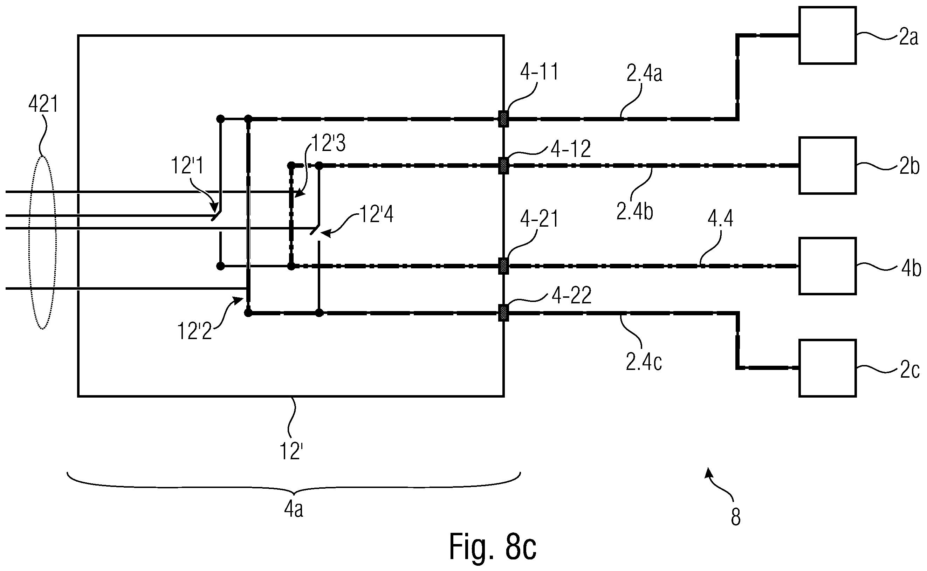

Figs. 8a-8c show an example of operation of the switching circuitry 12' (CTBV switching circuitry) which may be implemented in a communication node 4a (which can be any substantiation of the communication node 4 discussed above) in defining the different point-to-point(s) communication path. In this case, the communication node 4a is fixedly connected, through hard-wired connections 2.4a, 2.4b, 4.4, and 2.4c to the hardware nodes 2a, 2b, 4b and 2c (the hardware nodes 2a, 2b, 2c are considered to be primary nodes or other processing nodes, while hardware node 2b is here considered to be a communication node, but this distinction is arbitrary here). The switching circuitry 12' comprises a plurality of switching circuitry terminals 4-11, 4-12, 4-21, and 4-22, respectively fixedly connected to the hard-wired connections 2.4a, 2.4b, 4.4, and 2.4c. Internal to the switching circuitry 12', a plurality of switches is present. For example, the switch 12'1 selectively connects the hard-wired connection 2.4a with the hard-wired connection 4.4, thereby connecting the hardware nodes 2a and 4b (since node 4b is a communication node, another connection, not shown in the figure, is provided between the node 4b and another non-shown communication or processing node). The switch 12'2 selectively connects the hardware connection 2.4a with the hardware connection 2.4c in case of selection, thereby connecting the hardware nodes 2a and 2c. The switch 12'3 selectively connects the hard-wired connection 2.4b with the hard-wired connection 4.4, thereby connecting the hardware nodes 2b and 4b in case of selection. The switch 12'4 selectively connects the hard-wired connection 2.4b with the hardware connection 2.4c, thereby connecting the hardware nodes 2b and 2c in case of selection. Each of the switches 12'1, 12'2, 12'3, and 12'4 is controlled by the configuration data 421 (e.g., stored in the configuration memory 420). Fig. 8b shows an example in which a first point-to-point communication is defined, which, in this case, is between the node 2a and another hardware node (but the point-to-point(s) communication paths passes through the switching circuitry of the communication node 4b). This is obtained by selecting the switch 12'1, while deselecting the switch 12'2. In this case, the switches 12'3 and 12'4 are deselected, and the nodes 2b and 2c are not connected (at least not through the switching circuitry 12' of the communication node 4a). Therefore, a CTBV signal may be transmitted from the hardware node 2a towards the hardware node 4b with latency determinism. Subsequently (e.g., in view of a change in the configuration data downloaded by the communication node 4a, the switching as controlled by the configuration data 421 is changed, like in Fig. 8c. Here, the switch 12'1 is deselected, while the switch 12'2 is selected, thereby defining a second point-to-point communication path between the hardware nodes 2a and 2c. Meanwhile, the switch 12'3 is selected, while the switch 12'4 remains deselected, thereby defining a third point-to-point communication path between the hardware nodes 2b and 4b. Notably, two different point-to-point communication paths permit the latency-deterministic propagation of two different CTBV signals, where no interference between the propagation of one CTBV signal influences the propagation of the other CTBV signals.

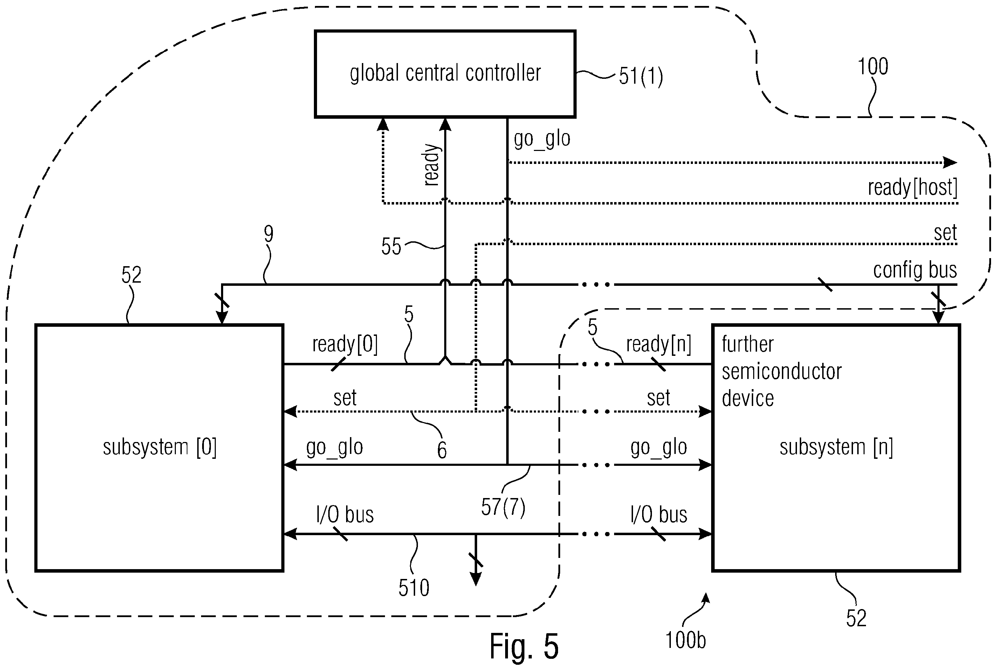

Fig. 5 shows that the semiconductor device system 100 may be connected to operate together with at least one further semiconductor device system 100b. The at least one further semiconductor device 100b may be a separate semiconductor device different from the semiconductor device system 100. The at least one further semiconductor device system may be connected to the semiconductor device system 100 through the package-switched configuration communication path 9, a common data interface (e.g., comprising the sequence 5, 6 and a digital bus 510), and a global "go_glo" command 57). The at least one further semiconductor device 100b may be substantially similar to the semiconductor device system 100, and have a second-tier controller and a plurality of further hardware nodes, which are not in principle different from the hardware nodes 2, 3, 4 of the semiconductor device system 100. However, in this configuration, all semiconductor device systems 100 and 100b operate as slave devices, and receive the global start command 57 from the global central controller 51. The global central controller 51 may be the central controller 1 of the semiconductor device 100 of Figs. 1-4, in which case it is here renumbered as 51 and in which case the "go_glo" signal can be identified with the global start command 7 of the semiconductor device 100, or it may be a separate device. The global central controller 51 controls the synchronism in all the semiconductor devices 100 and 100b, and the global start command and/or the global stop command 57 are transmitted to all semiconductor devices 100 and 100b, which, either directly or through their own second-tier central controllers 1, synchronize the plurality of their respective internal hardware nodes. Then, all the "ready" signals will either be transmitted from each hardware node of each semiconductor device 100 and 100b towards the global central controller 51 or, in another case, all the semiconductor devices 100 and 100b will each send one single "ready" signal 5 indicating the readiness of the totality of hardware nodes of the plurality of hardware nodes of the respective semiconductor devices 100 and 100b (e.g., as collected by the second-tier central controllers 1 of the semiconductor devices).

### Spiking neural networks

The semiconductor device system 100 may implement a spiking neural network, SNN. The SNN may comprise a plurality of neurons. Each neuron may have runtime configurable parameters (e.g. offset, gain, activation function, etc.). Each neuron may output at least one CTBV signal processed as determined by the runtime configurable parameters. The SNN may include a plurality of synapses between the neurons, each of which may have runtime configurable parameters (e.g. synaptic weight, transmission probability, delay, etc.). Each synapse may provide an input signal to a neuron. The input signal may be an output signal of the same neuron, or from another neuron. At least one neuron of the plurality of neurons may be implemented in one unique processing node (e.g. one single primary node 2) among the plurality of processing nodes. At least one synapse may be implemented, in part, in a respective point-to-point(s) communication path of the plurality of point-to-point(s) communication paths in the CTBV interconnection circuitry 8, and in part inside the processing node of the at least one source and/or target neuron connected to the synapse. CTBV signals may be transmitted by each processing node (e.g. primary node) 2 to encode the values outputted by the neurons. The runtime configurable parameters (e.g. neuron parameters and synapse parameters) may be provided to the respective processing node (e.g. primary node 2), for example, by download (e.g. during the configuration download phases 21). In the transition phase (e.g., 22, e.g. 22c), the downloaded runtime configurable parameters may be uploaded in the core 12, so that they are used in the subsequent operative (processing) phase 23. It is possible, for example, to download, in one single download, a plurality of configuration data with different runtime configurable parameters, to be used in different operative phases 23. In the SNN, the inputs may be provided to I/O nodes 3 used as input, and the system 100's outputs may be provided to I/O nodes 3 used as output. A plurality of hidden layers or recurrent connections may be provided by a plurality of primary nodes 2. The plurality of primary nodes 2 may be adequately interconnected according to point-to-point(s) communication paths e.g. conditioned by the switching controlled by the communication node(s) 4, thereby embodying the synapses.

The host 200 may control the functioning of the SNN. In particular, the host 200 may:
command a simultaneous transmission of a configuration download command (6) to at least one hardware node of the plurality of hardware nodes;
transmit configuration data in a subsequent configuration download phase to the at least one hardware node which has entered the configuration download phase (22).

The host 200 may assign, to each individual neuron or a plurality of neurons, one hardware node, and to each synapse, one point-to-point(s) communication path, and/or provide, to each hardware node, runtime configurable parameters, as part of the configuration data.

The host 200 may control at least one training session onto the semiconductor device system 100, during which different outputs signals are examined for different input signals and different runtime configurable parameters. The host 200 may evaluate the input and output signals and runtime configurable parameters according to a given cost function and optimize the runtime configurable parameters so as to minimize the cost function. In some examples, once the training session is performed, the host 200 may be disengaged (disconnected), and the configuration sessions 21 (as well as the "set" command 6) may be not used anymore (while the semiconductor device system 100 may continue to operate). In other examples, the host 200 may remain as part of the semiconductor device system 100 (or as a device permanently engaged to the semiconductor device system 100) and continue operating.

It is also noted that the latencies, which are in general impaired by the different conductivities of the different point-to-point(s) communication paths (e.g., a long point-to-point(s) communication path has in general a higher resistance and capacitance than a short point-to-point(s) communication path) can be compensated in applications such as a SNN. If, for example, a synapse has a large resistance, the calculation of its runtime configuration parameter(s) (e.g. weights) can also take into account the larger resistance, and the training (learning) process can therefore be performed under consideration of the runtime configuration parameter(s) with that particular large resistance. After the training phase, the same synapse will have the same point-to-point(s) communication path and the same resistance, as well, and therefore the runtime configuration parameter(s) will deterministically suite to the particular synapse.

By virtue of the latency determinism, it is possible to grant that two different SNNs with same hardware, same configurations and same runtime configuration parameters will behave in identically. Therefore, the results of a training can also be transferred another identical device.

Even more advantageously, it will be possible to train an SNN on another device (CPU, GPU) with knowledge about the delays which would occur when applying it on the invented device. So to say a hardware-aware training. The runtime configuration parameters obtained through the hardware-aware training will then be provided to the hardware nodes during initial configuration phases (and the host could also be disconnected after having provided the runtime configuration parameters).

### Further discussion

### The present solution

We invented a system architecture and control flow for processing data, primarily time-varying signals, using distributed nodes with user-defined functionality that communicate via a configurable asynchronous digital communication network. The distributed hardware nodes 2, 3, 4 run concurrently without need for a global clock, and they communicate through globally asynchronous continuous-time binary-value (CTBV) signals. These CTBV signals are routed through a CTBV interconnection circuitry (e.g. a configurable grid-like network of multi-wire buses with constant and predictable delays for a given configuration). The operation of the semiconductor device system 100 may be broken up into distinct processing phases, which may allow time-multiplexed operation. The characteristics of the semiconductor device system 100 allow encoding of information directly in the timing of CTBV signals within processing phases. The proposed control flow enables self-controlled re-configuration of the semiconductor device system 100 based on local configuration memories (e.g. 420) of hardware nodes 2, 3, 4 as well as receiving external updates (e.g. new configuration data) for the local configuration memories 420 between two different processing phases.

Here, there are mostly discussed a) the set of interfaces of the hardware nodes, and/or b) the proposed control hierarchy and/or c) the processing scheme, which preferably together support the time-multiplexed processing of precisely timed CTBV signals. We also provide d) specific implementation examples of system components.

Specifically, we propose a system comprising a *central controller* (1), *I*/*O nodes* (3), *primary nodes* (2) and *communication nodes* (4) that operate in parallel without need for a global clock. Each processing node (which is a primary node or a I/O node) and each communication node is connected to a common *configuration interface* (9), common *control interface* (embodying the group of at least one among the "go" signal 5, the "ready" signal 6, and the "set" signal 7) and a common *data interface* (CTBV interconnection circuitry 8), each described in detail below, as well as a core (12) that determines the behavior of the hardware node. The core 12 may be defined by the configuration data downloaded by the hardware node. The core 12 can be digital, analog or mixed-signal.

Once configured, each hardware node 2, 3, 4 may run continuously through a sequence of (e.g. three) *phases.* Each operation of entering in one of these phases acts as a synchronization barrier and may be triggered through special *flags* in the control interfaces of system's internal nodes and/or the host 200. During *configuration download phase 21,* (configuration) data can be received (e.g. downloaded) from the host 200. During *transition phase 22 (or any of its instantiations 22a, 22b, 22c),* each hardware node can perform internal operations (reconfiguration or re-initialization) to prepare for the next *processing phase 23.* During *processing phases 23,* all hardware nodes operate asynchronously and communicate via the data interface (CTBV interconnection circuitry 8).

### Architecture components

Each primary node 2 and at least one I/O node 3 receives incoming CTBV signals from a multi-wire input port (arrived along one point-to-point(s) communication path). Each primary node 2 and at least one I/O node 3 produce outgoing CTBV signals on a multi-wire output port (connected to a one point-to-point(s) communication path). The in- and output ports of each processing node 2, 3 may be, in some implementations, connected to corresponding ports on at least one communication node 4 (this appears, for example, in Fig. 1, where each processing node 2, 3 is connected to one single communication node 4 through at least one path segment 2.4, which is a segment of the CTBV interconnection circuitry 8, but this is not strictly necessary in some examples).

At least one communication node 4 may be additionally connected to several other communication nodes via the same type of interface (through the CTBV interconnection circuitry), which may include a multi-wire bus, and/or communicates with these connected communication nodes 4 via the same type of CTBV signal (this appears, for example, in Fig. 1, where each communication node 4 to is connected to another communication node 4 through at least one path segment 4.4, which is a segment of the CTBV interconnection circuitry 8, but this is not strictly necessary in some examples). The communication nodes 4 may therefore be considered to control the *data interconnect system* (CTBV interconnection circuitry 8). The user-defined core 12' (which may be embodied by the switching circuitry, or by logic which control the switches) of the communication node 4 may determine how data is relayed between the hardware node's ports. In particular, this may depend on configuration data that can be dynamically changed during runtime, specifically during *configuration download phases 21* and *transition phases 22.* To enable the encoding of information directly in the timing of CTBV signals it is required that the *data interconnect system* (CTBV interconnection circuitry 8) has constant and predictable transmission delays for a given configuration. In a globally asynchronous system, this requirement excludes package-switched *data interconnect systems,* where transmission delays depend on the a-priori unknown amount of data traffic. We instead suggest a circuit-switched implementation, e.g. a switched fabric, e.g. for embodying the CTBV interconnection circuitry 8, or, more in particular, the switching circuitry 12').

An implementation example of a communication node 4 with constant and predictable transmission delays is a communication node 4 including or controlling a *switching block,* which can use any combination of static connections and dynamically programmable switches to connect its CTBV inputs to its CTBV outputs. The dynamic switches can be set (e.g. during a transition phase 22, or 22a, 22b, or 22c) in dependence on the communication node's configuration and thus provide flexibility for programming different connection patterns and time-multiplexing between them. Static connections provide an area efficient means to forward CTBV signals directly through a communication node. By combining static and dynamically switched connections, such a switching block (e.g.12') can be designed to support any degree of flexibility, starting from a static one-to-one connection pattern between one input and one output each, up to a fully programmable implementation that allows arbitrary connection patterns between inputs and outputs. Additionally, the input and/or output CTBV signals of each communication node could be regenerated to the full signal amplitude, in order to counteract any attenuation effects. A connected set of such communication nodes can be interpreted as a switching fabric, which is a special case of the data interconnect system (CTBV interconnection circuitry 8).

User-defined cores 12 of each I/O node 3 can support, in principle, arbitrary types of inputs and outputs (10), provided that they convert the in- and outputs to and from the CTBV format required by the *data interface* (CTBV interconnection circuitry 8). An I/O nodes 3 can be connectable to dedicated pins of a physical chip, an internal digital bus, inter-chip-interconnect or any other source/sink of inputs/outputs. Each I/O node 3 may be associated with at least one communication node.

Each primary node 2, 3 or communication node 4 may be additionally connected through its configuration interface to a *configuration bus system* (or more in general configuration communication circuitry) that is independent of the data interconnect system (CTBV interconnection circuitry 8). No constraints are imposed on how the cores 12 and 12' of processing and communication nodes 2, 3, 4 use the configuration bus system (or more in general configuration communication circuitry) 9, but one intended usage is outlined in the section "Program execution".

The distinction between I/O, primary and communication nodes can be merely conceptual and may simplify the description of the semiconductor device system 100; formally, all communication nodes 4 and I/O nodes 3 could be interpreted as special implementations of the hardware nodes, in which case the entire system 100 can also be described entirely in terms of hardware nodes.

### Program execution

A program is executed on the proposed architecture by going through several distinct *phases.* Entering new phases may occur by the globally broadcasted *set* (6) and *go* (7) flags. Each node can signal its own readiness for phase transitions to the central controller through separate *ready* (5) flags. If operated by the external host 200, the host 200 controls the *set* flag (6) as well as an additional *ready* flag (5), which allows the host to delay phase transitions as long as desired by keeping the flag low or high, respectively. If operated without the external host 200, the *set* flag (6) is not needed and can, for the rest of this text, be assumed to be constant high (1).

In some examples, central controller 1 can operate in two modes:
in *eager execution mode,* the *go* flag is controlled autonomously by the system's controller based on the *ready* flags,
in *step-mode,* the host may overwrite the *go* flag at arbitrary points in time.

### Boot-up and reset

After boot-up, the semiconductor device system 100 is reset. After reset of the semiconductor device system 100, each hardware node 2, 3, 4 initializes the *ready* flag in its control interface to low (0), and the central controller 1 initializes the globally broadcasted *go* flag to low, as well (boot-up phase 20). This sets up the semiconductor device system 100 for a first *configuration download phase 21.*

### Configuration download phase

When operated with the host 200, the host 200 controls the broadcasted *set* flag. When the *set* flag is low while the *go* flag goes low (or if both *set* and *go* flag are initialized to zero on boot-up), a *configuration download phase* (21) may be started.

During a *configuration download phase 21,* hardware nodes 2, 3, 4 can receive (by download) new (updated) configuration data from an external source (e.g. the host 200), via their configuration interfaces, through the configuration communication circuitry 9. The configuration *download* phase 21 can thus be used for overwriting node-internal memories (e.g. configurations of processing and communication nodes and input data for I/O nodes 3) without the risk of collisions with read accesses that can occur during the other phases.

Once the host 200 sets the *set* flag to high, the *configuration download phase 21* ends and a *transition phase* begins. If the *set* flag is already high when the *go* flag goes low (e.g. if the set flag is held constant high), the configuration *download* phase 21 may be skipped entirely in some examples, and the next *transition phase* 22 begins immediately.

### Transition phase

In the *transition phase* (22) each hardware node 2, 3, 4 can, but does not have to, perform internal (re-)configuration as determined by the user-defined core of the hardware node. Once a hardware node 2, 3, 4 has completed its reconfiguration, the hardware node 2, 3, 4 may set the *ready* flag (5) in its control interface to high.

In *eager execution mode,* the central controller 1 may monitor the hardware nodes' (and, if available, the host's) *ready* flags, and once all of these flags have been set, the central controller immediately sets the go flag to high, which ends the current *transition phase* and signals to all nodes that the next *processing phase* has begun.

In *step-mode,* the go flag is instead controlled by the host via an external flag *go_ext*(11). This means that the transition from *transition* to *processing phase* (and vice versa) is explicitly triggered from the outside by setting or clearing that flag. The step mode may be useful, for example, for performing debugging, and/or if an external input signal is provided and needs to be processed at fixed intervals, in particular if the user-defined cores 12 and 12' run continuously and do not generate any ready signals themselves.

### Processing phase

During a *processing phase* (23), each processing node 2, 3 asynchronously processes its CTBV input signals and/or produces CTBV output signals as determined by the core 12. Once a hardware node is ready to end the current processing phase 23 (this is also determined by the core 12 of the hardware node), it clears the *ready* flag again.

E.g. when in *eager execution mode,* the central controller signals the end of the current *processing phase* by clearing the global *go* flag again once all nodes (and the host, if any) have cleared their respective *ready* flags.

E.g. when in *step mode,* the processing phase continues until the host clears the *go* flag.

Clearing the *go* flag may trigger the beginning of the next *configuration download phase 21* (e.g. if the set flag is low), or it causes the *configuration download phase* to be skipped, and the hardware node may proceed to the next *transition phase* 22 (or 22a, 22b, 22c), e.g. if the *set* flag is high.

This cycle of alternating *(optional) configuration, transition* and *processing phases* may repeat indefinitely. Figs. 2a and 2b show state processions for the *ready-set-go* phase transition sequence.

### The control interface

Each hardware node 2, 3, 4 may contain the same control communication interface, comprising at least one of the global *go* flag, which can only be read by the hardware node, and the local *ready* flag, which can be set and cleared by the hardware node. As described previously the communication interface can be extended by a *set* flag, which can only be read.

### Implementation example: static node

An example implementation of a non-configurable, non-resettable processing node would set its *ready* flag as the inverted *go* flag and ignore the *set* flag. Excluding individual non-configurable and non-resettable nodes completely from this handshake would also be possible as long as they are able to continuously process CTBV signals.

### Implementation example: reconfigurable node with phase counters

Another implementation example of a reconfigurable hardware node 2, 3, 4, which is also able to perform an internal initialization between *processing phases,* is shown in Fig. 4. Besides a configuration memory (420) (storing configuration data obtained by download, e.g. during the configuration download phase) and a core (12 or 12') defined based on the configuration data each hardware node may contain one multi-bit counter with control logic called *config_count* (400), and/or another multi-bit counter with control logic called *phase_count* (410) and/or the flags *clear* (412), and/or *next_config* (411) and/or *reconfig* (401). The counter value of *config_count* may be used as program counter and/or may be readable by the configuration memory via the signal *config_pointer* (402). Two signals called *loop_start* (423) and *loop_end* (422) may be set by the configuration memory and read by *config_count.* When the counter value in *config_count* equals *loop_end* (331) it is set to *loop_start* the next time it is incremented (341). The counter value of *phase_count* can be set by the user-defined core during a *transition phase* via the multi-bit signal *set_phases* (431) that might contain data and control signals. Setting it to a value greater than zero is used to skip that many cycles of *transition* and *processing phases* before the hardware node performs the next reconfiguration. The counter value of *phase_count* may be readable by the user-defined core via the signal *phase_pointer* (413). For the initial configuration or a reconfiguration, the hardware node can read the configuration stored at the address defined by *config_pointer* via the signal *config_data* (421). All registers and flags may be initialized (e.g. to zero) after start-up or re-initialization or reconfiguration. Therefore, in the initial *transition phase* the core configures itself with the configuration stored at address zero of the configuration memory 420.

At the beginning of each *transition phase,* the counter value of *phase_count* may be checked. If it is zero (301), then the *next_config* flag may be toggled (320). This causes the counter value of *config_count* to be incremented e.g. by one (340), when it is not equal to *loop_end* (330), or reset to *loop_start* (341). *config_count* then may toggle the *reconfig* flag (350), which triggers a reconfiguration process (351) of the processing core 12 or 12' from the configuration memory 420, that is not limited. Considered options are the usage of a memory access handshake or handshake-less memory where the data stored at *config_pointer* is directly available to the core. A reconfiguration can include setting *phase_count* to a new value. After reconfiguration the processing core sets *ready* to high, and remains waiting at 352.

If *phase_count* is not zero (300), then it may be decremented by one (310) and the *clear* flag may be toggled (360). The *clear* flag may trigger the processing node to perform an optional reset (361) of internal states and set *ready* to high after that. Fig. 3 shows the described logic in a flow chart.

This invention does not limit whether the ready flag is used as a handshake answer to reset the *reconfig* or *clear* flag, or the user-defined processing core is double-edge sensitive. It also does not limit whether this control interface is implemented in synchronous logic with a global or local clock or asynchronous logic.

Fig. 4 shows an example consisting of one processing node 2 and one communication node 4 both using the above described control interface.

### The configuration interface

Each hardware node 2, 3, 4 may have a configuration interface that connects it to the configuration bus system (configuration communication circuitry 9).

### The data interface

Each processing node 2, 3 exchanges data with one or more associated communication nodes 4 and/or other processing nodes 2, 3 e.g. through a multi-wire bus, or more in general with a CTBV interconnection circuitry 8 (e.g. segments 2.4). Communication nodes 4 may be connected e.g. to each other via the same type of connections (e.g. segments 4.4 in Fig. 1). The signals on each wire of the CTBV interconnection circuitry 8 are CTBV signals, but no specific timing or other constraints are necessarily required.

### Input and output

The possible input/output interfaces used in I/O nodes 3 are not limited by this invention. It is also not limited when I/O nodes 3 receive or send external input or output data and how they convert the in- and outputs to and from the CTBV format required by the *data interface* (CTBV interconnection circuitry 8). I/O nodes 3 simply send and/or receive CTBV signals via their *data interface* (CTBV interconnection circuitry 8) *e.g.* during *processing phases* 21 and may implement a *ready-set-go* or, if no *set* flag is used, the reduced *ready-go* phase transition logic.

One possible use-case is to use I/O nodes 3 to wait in a *configuration phase 21 or transition phase* 22 (or any of its possible instantiations, such as 22a, 22b, 22c) and thereby delay the start of a new *processing phase* until new input data is available. In combination with an I/O node configuration that defines whether an I/O node requires new input data for the next *processing phase,* this can be used for an input-driven program execution. Adding FIFO-like input or output buffers would also allow for asynchronously receiving input and sending output data, while processing already available data.

Another specific use of I/O nodes 3 may be to support caching intermediate results of time-multiplexed *processing phases,* i.e. to (approximately) record CTBV signals during one phase and to output them during a later phase. To support this behaviour, an I/O node 3 needs to be able to store the time-course of an CTBV signal with an application dependent precision. A synchronous digital implementation example of this is a shift register, that approximately records a CTBV signal by shifting in a 1-bit during each clock cycle where the observed CTBV signal was high, and a 0-bit otherwise. The resulting bit-sequence can be stored and later used to reproduce a CTBV signal by iteratively shifting out the stored bits, and outputting a high signal for the duration of one clock cycle for each 1-bit, and a low signal for each 0-bit.

### Hierarchical application

We foresee two different ways in which our proposed architecture system architecture and control flow can be incorporated into a larger hierarchical system architecture.

First, it is possible to instantiate any type of user-defined processing core within a processing node, as long as it is compatible with the previously described data, control and configuration interfaces. That means that arbitrarily complex subsystems including multi-core architectures can be nested inside processing nodes. The internal communication inside such subsystems is not limited to CTBV communication. For example, in the context of processing SNNs a user-defined processing core might contain a neuromorphic circuit implementation of a single neuron or a group of neurons with associated synaptic connections, or a circuit that otherwise emulates the operation of a neuron or group of neurons.

A second extension of the architecture can be realized by connecting multiple subsystems (52), each of which follows the system architecture and control flow described above, via an arbitrary I/O interface (510) connected to the subsystems' I/O nodes. In this case, the communication between the subsystems does not have to obey the CTBV format, and can instead be digital (synchronous or asynchronous), analog, optical, wireless radio or others. A *global central controller* (51) is used to apply the *ready-set-go* phase transition sequence globally to all subsystems by reading all *ready* flags (55) and overwriting the subsystems' *go_ext* flags with a global go_glo flag (57). The *set* flag (6) is broadcasted from the host to all subsystems. The host can also use a shared configuration bus (9) connected to the configuration interfaces of the subsystems. Fig. 5 shows such a hierarchical application for n subsystems.

### Simulation

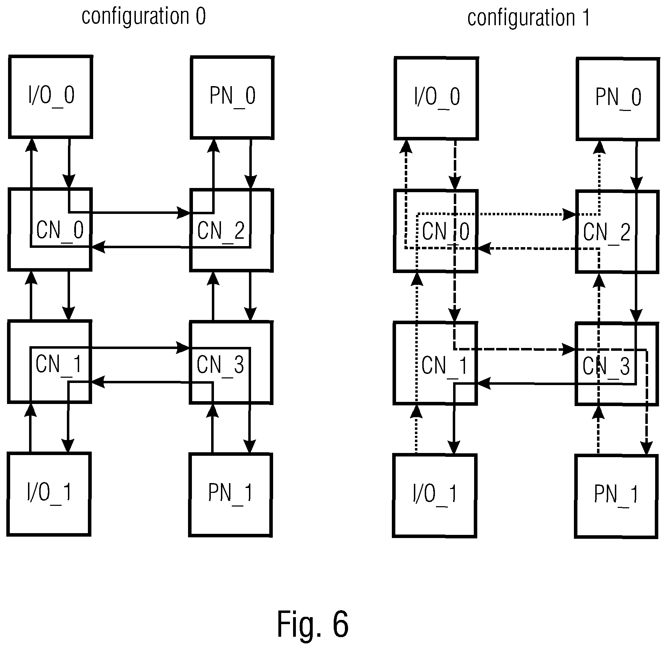

A first simulation setup to verify basic functionality of the proposed architecture and control flow was implemented with SystemC. The implemented architecture consists of one host, a central controller, two I/O nodes, two processing nodes and four communication nodes. Each hardware node has a configuration memory containing two different configurations. While I/O nodes 3 are switching their firing rate and stimulus duration per processing phase between configurations, primary nodes 2 are switching their "neuron" thresholds and communication nodes 4 are switching their connectivity as shown in Fig. 6. While I/O nodes 3 and primary nodes 2 have an initial *phase_count* of 0 for both configurations and therefore reconfigure themselves with every transition phase, communication nodes 4 have an initial *phase_count* of 1 for their second configuration.

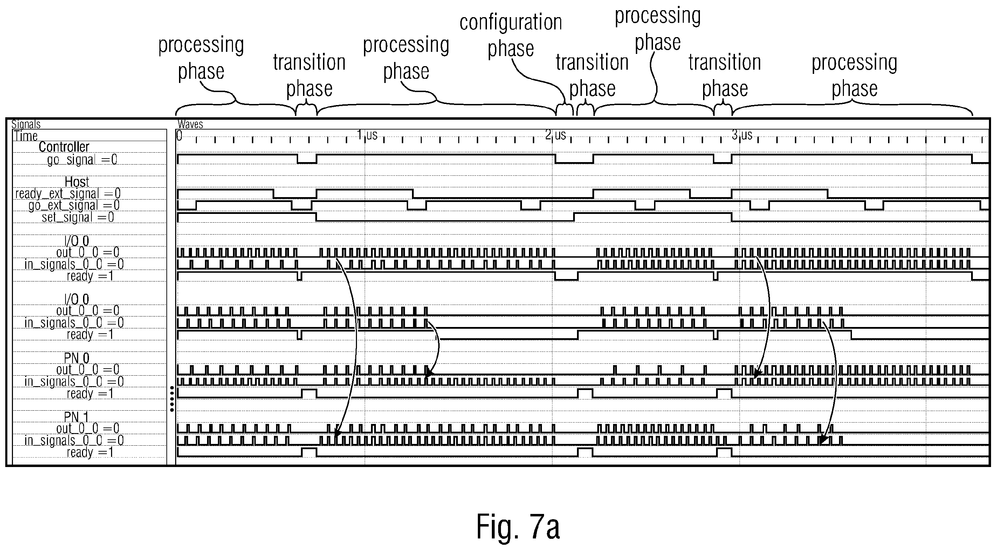

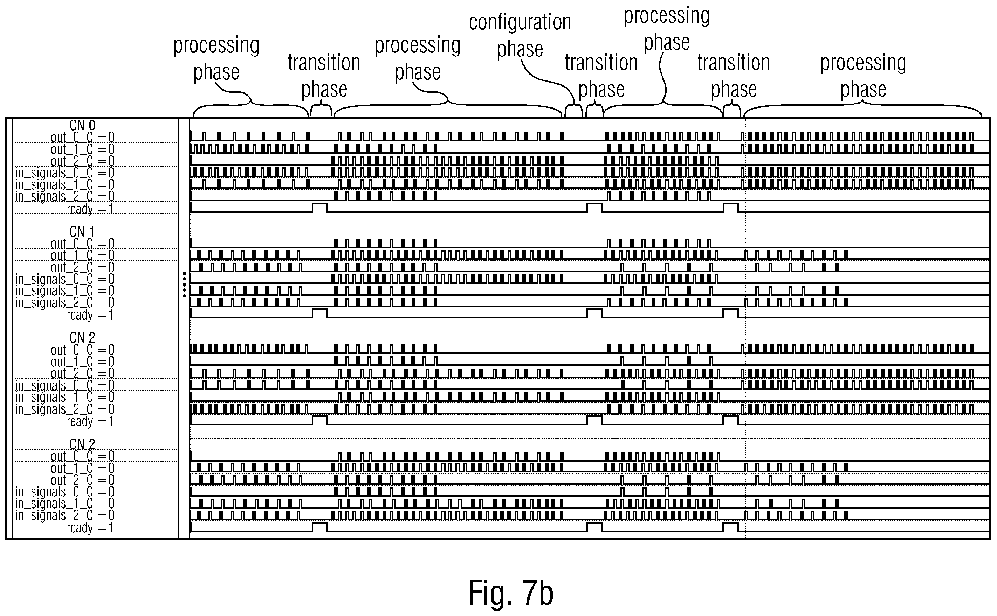

The setup of the simulation is shown in Fig. 6, while the results are in Figs. 7a and 7b.

### Prior art of implementation example: reconfigurable node with phase counters

The usage of local program memory with program counters (phase_count and config_count are basically a two-stage program counter) has some advantages e.g. in combination with the ready-set-go handshake discussed above. For the application of spiking neural networks logical neurons are only reprogrammed to physical ones between time-multiplexing steps, instead of being loaded within processing phases. The latter is typically the case for traditional neuromorphic hardware, like Intel's Loihi chip, where spikes are assigned with addresses and the parameters of the correct logical neuron are loaded from local memory in dependence on the address whenever a new spike is processed. There is currently no architecture where local program counters and program memory are synchronized via a global handshake to advance during (e.g.) transition phases, but being inactive during processing.

### Application for Spiking Neural Networks

When applying the hardware architecture to the application of Spiking Neural Networks the described abstract nodes can be specified as follows.

A *processing node* may represent one or multiple spiking neurons, which process incoming CTBV signals containing binary spikes, whereby the length of a spike as well as its timing might contain information. When turned "on" (being in a processing phase), neurons receive incoming spikes, process incoming spikes and send out generated spikes globally asynchronously without waiting for a global synchronization signal. That typically requires a mixed-signal implementation to avoid arbitration problems (or short circuits), which would distort the timing of incoming spikes, when simultaneously processing multiple inputs. A neurons' configuration can contain parameters regarding the neuron itself (threshold, leakage, offset, etc.) but it may also contain the weights of a neuron, if the synapses are implemented within the neuron itself and each input synapse of a neuron is associated with one CTBV input terminal of the neuron. A reason for synapses to be implemented within neurons and not for example within the switch boxes may be that a weighting of the input CTBV signals within synapses either requires the transmission of a spike pulse with variable amplitude (which is no longer a CTBV signal) or length (which can result in collision / overlapping if implemented in switch boxes). Therefore a preferred solution may be implementing synapses in conjunction with the target neuron inside a single processing node, where the result of the weighting of a CTBV spike does not have to comply with CTBV signal constraints anymore, but can be a continuous value voltage or current, etc.

The *communication nodes* 4 may be implemented with configurable switch boxes (e.g. 12'), which together form a switched fabric network. A circuit-switched communication is used instead of package-switched communication, which is dominant in prior art of neuromorphic hardware, because circuit-switched communication has (for one configuration) only constant delays and no traffic dependent delays. The number of inputs and outputs of communication nodes (switch boxes) in relation to the number of inputs and outputs of processing nodes (neurons) defines the number of possible connections (synapses) that can be realized by the system when implementing a Spiking Neural Network. Therefore, the optimal number of inputs and outputs for the communication nodes as well as the optimal number of inputs and outputs of the processing nodes depends on properties of the class of networks to be executed (e.g. the fan-in and fan-out of neurons, the size of the network and its topology).

I/O nodes 3 can be implemented, for example, in a sample-based input fashion or an always-on fashion. A sample-based input fashion could mean, for example, that they receive either arbitrary input data representing one discrete data sample, which they subsequently convert it into spike trains, or receive spike trains (or digital approximations thereof) that represent one discrete input sample. The neurons and switch boxes could, for example, either stay "always-on", meaning they are not being reset between samples or they can be synchronous, so that a global synchronization signal (e.g. ready-set-go) can be used to reset nodes between samples.

In addition, the ready-set-go handshake can, for example, also be used to execute larger networks on the chip in a time-multiplexed fashion than supported in parallel by the number of physical neurons and connections, when neurons and switch boxes have local memory from which they can reconfigure themselves. This time-multiplexed mode may require the I/O nodes 3 to be able to buffer spike trains of one time-multiplexing step and feed them to the next step.

Another use-case may be, for example, the always-on operation of the spiking neural network, in which the complete network can be mapped in parallel onto the systems processing and communication nodes, the I/O nodes receive spike trains as input and produce spike trains as output, and no time-multiplexing or reconfiguration is needed during operation. The neurons and switchboxes then only need one initial configuration and can continuously process spike events.

A big challenge when applying an always-on spiking neural network to a real-time application is that the temporal dynamics determined by parameters of the neural network model, and therefore also the temporal dynamics of its hardware implementation, must meet the timing requirements of the application. This is a yet unsolved problem, since most current approaches implement spiking neural networks in discrete time or globally synchronized processing (pipeline) steps (e.g. Intel Loihi, IBM TrueNorth), which have no strict relation to physical time. Our proposed system 100 instead allows the user-defined cores 12 to incorporate analog circuits or digital circuits with local clock that can realize arbitrary temporal dynamics as required by the use-case.

### Mode of operation in (neuromorphic) SNN hardware accelerators

An important feature of our architecture is its specific mode of operation, e.g. for executing SNNs. Neuromorphic SNN accelerators typically operate in two phases, a configuration phase (e.g. after reset) during which parameters are loaded into memory, and an inference phase, during which data is processed with the given set of parameters. A time-multiplexed operation therefore requires alternating between these two phases, i.e. repeatedly loading the currently valid configuration from a central memory or a buffer. We are not aware of a neuromorphic SNN accelerator that makes use of a stage-transition signaling and handshaking mechanism similar to the one proposed in our solution.

### Characteristics

### Some aspects:

1. Interfaces of cores, control flow and program execution
2. fully asynchronous, time continuous, "always-on" processing within processing phases, where CTBV signals can propagate through modules
3. CTBV communication takes place with constant predictable delays only varying with temperature not with traffic
4. global dynamic synchronization between phases resulting in no fixed durations of phases

### Effects and Benefits

- our solution provides a set of interfaces and control flow that allows implementing asynchronously operating systems of analog, digital or mixed-signal user-defined components
   ∘ the asynchronous data flow minimizes latency and power consumption
   ∘ the central controller can coordinate the program execution without need for external input or a dedicated finite-state-machine
- the programmable data interconnect system allows for dynamically programmable and time-multiplexed routing of CTBV signals
- the ready-(set)-go mode of operation allows time-multiplexing and reconfiguration of individual components without the risk of corrupting ongoing operations
- the separation of the control flow via the ready-set-go flags, the configuration data flow via the configuration bus and the data flow via the data interconnect system makes each of these interfaces very simple:
   ∘ The configuration interface is fully user-defined and can be chosen according to use-case requirements
   ∘ The data-interface uses CTBV signals transmitted on multi-wire buses with no additional timing constraints. Therefore, the user-defined core of the node can generate these CTBV signals in arbitrary ways, and it can use the signals to transmit arbitrary types of data, e.g. PWM signals or even digital packages.
   ∘ A continuously running node that requires no reconfiguration (e.g. a fixed analog circuit) can be implemented by setting its *ready* flag to the inverted *go* flag.
   ∘ A node that can be interrupted at any point during the processing phase can just set the ready flag to high immediately after entering the processing phase.
   ∘ Each node can independently determine and signal when it has completed the current phase; the combination of these signals is done by the central controller.

### Technical application domain

- The proposed architecture and program flow are generic enough to be useful for a broad range of applications.
- It could be used as a framework for constructing novel forms of field-programmable analog arrays (FPAA), i.e. reconfigurable circuits composed of analog building blocks such as filters, non-linear components, analog-to-digital converters etc.
- It could be used as a framework to construct massively parallel (asynchronous) digital devices.
- One specific application area for this broader architecture concept are neuromorphic accelerators for spiking neural networks (SNNs). SNNs are a specific class of neural networks, where the individual neurons (nodes) of the network communicate with each other exclusively through the exchange of *spike events,* which can be represented by asynchronously generated binary pulses, and thus CTBV signals. Each neuron processes asynchronously incoming spikes and generates outgoing spikes at arbitrary points in time, dependent on the internal state and configuration of the neuron. Therefore, neuromorphic SNN accelerators need to combine the parallel mixed-signal processing of the neurons with CTBV communication and could thus benefit substantially from our solution in terms of latency and, presumably, power consumption. Our architecture/program flow supports this by implementing the behavior of (groups of) neurons and synapses inside user-defined analog/mixed-signal cores of the processing nodes, and routing the generated spike signals through the data interconnect system. The network topology can then be programmed into the communication nodes and time-multiplexed using the ready-set-go mechanism, which allows the accelerations of large neural networks across multiple time-steps.

### Further characterization of the figures:

Figure 1 System architecture example, where each processing node (2) and I/O node (3) is associated with exactly one communication node (4). Each node contains a user-defined core (12). Communication nodes are connected in a 2D mesh via data paths (8) compatible to the CTBV data interfaces. Each node's ready flag, indicated by an index is combined into a multi-wire ready signal (5) (without index), which is readable by the central controller (1) and from outside the semiconductor device system 100. The central controller's go flag (7) is readable by all nodes and the host. The set flag (6) is set by the host and readable by all nodes. Nodes can be configured via a not specified configuration bus (9) and I/O data can be received and sent by a not specified I/O bus (10). The internal go flag might be overwritten by an external go flag (11).
Figure 2a: Phase transitions diagram with boot-up or reset (20), configuration (21), transition (22) and processing (23) phase. A signal or flag within a phase circles is set to the specified value during the phase. Signals or flags specified at a phase transition are conditions for the transition. ready = 0 or ready = 1 means, that all ready signals are 0 respectively 1.
Figure 3 Example flow chart for transition phase of a configurable node, which can either perform an internal reset (361) or reconfiguration (351) of the user-defined core. A decrement of a counter value is indicated by -= 1 and an increment by += 1.
Figure 4 Example of configurable processing and communication node. Each contains a configuration memory (420), a config_count (400), a phase_count (410) and a user-defined processing respectively communication core (12). A central controller (1) in combination with an optional host controls both type of nodes via ready (5), set and go (7) flags.
Figure 5 Hierarchical application of the invented architecture by connecting multiple subsystems (52), which follow the invented architecture, via an arbitrary I/0 interface (510) and a global central controller (51).

### Some final summarizing

The semiconductor device system 100 may be instantiated, for example, by a chip (with internal or external host 200). The hardware nodes 2, 3, 4, the circuitry 8 (including the hard-wired connections), and the central controller 1 may therefore be implemented in ASIC in the same chip.

In general terms, the hard-wired connection, the switching circuitries, and the hardware nodes exchange electric communications (and the CTBV signals are electric signals, as well).

Here below a quick review on the several wirings that may be used:
1) CTBV interconnection circuitry 8, including:
   a. Hard-wired connections 4.2, 3.4, 4.4, each fixedly connecting at least two hardware nodes, each latency-deterministically supporting the transmission of CTBV signals.
   b. Switching circuitry 12', e.g. defining, according to the downloaded configuration data, the point-to-point(s) communication paths by defining which hard-wired connection is to be connected to which other hard-wired connection, and latency-deterministically supporting the transmission of CTBV signals.
2) Package-switched configuration communication circuitry 9 (e.g. configuration bus system), connected to each hardware node, and providing configuration data to each hardware node (e.g. during the non-operative phases). The package-switched configuration communication circuitry 9 may not support the transmission of CTBV signals and may be non-latency-deterministic. Configuration data may be provided, for example, in data packets having an address indicating the specific hardware node which shall download the configuration data. The configuration communication circuitry 9 may be connected to the host 200 (which may be either internal to the semiconductor device system 100 or may be an external device). The host 200 may be the element which transmits (or which controls the transmission of) the configuration data to each hardware node.
3) Control interface, e.g. including at least one of:
   a. A global start/stop connection connecting the central controller 1 with each hardware node (e.g. through one single, uninterrupted electric line connection), e.g. for providing the global start command (e.g. "go" signal 7, or "go=1") and/or the global stop command (e.g. "go=0").
   b. A set connection, connecting the (internal or external) host 200 with each of the reconfigurable hardware nodes (if a hardware node is not reconfigurable, its configuration can be skipped). The set connection may be either global (e.g. through one single, uninterrupted electric line connection) or point-to-point for each hardware node. The set connection may provide:
      i. a configuration download command (e.g. "set=0"), so that the hardware is triggered to start the configuration download, to download configuration data; and/or
      ii. a transition command (e.g. "set=1"), so that the hardware is triggered to start either the reconfiguration or the re-initialization.
      (The set connection may be deactivated (e.g., permanently pulled at 1), in the cases in which the host 200 is deactivated, and the configuration data downloads become unnecessary.
   c. A point-to-point notification connection from each hardware node towards the central controller 1, through which each hardware node sends its notification of readiness to enter the operative phase when being in non-operative phase (e.g., in transition phase 22, and more in particular in waiting subphase 352.
      (The different commands and notifications may be transmitted, for example, as different values in the signal transmitted in the connection, e.g. binary values, etc. In some cases, the command may be encoded in the state of the signal, e.g. its voltage, while in other cases the signal may be impulsive, so as to reduce power consumption).

The extenal non-CTBV connections, connected or connectable to the I/O nodes (and, for example, to pins of the chip instantiating the semiconductor device sysetm 100), provide inputs and receive outputs.

### Further examples

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some examples according to the invention comprise a data carrier having electronically readable control signals, which are capable of cooperating with a programmable computer system, such that one of the methods described herein is performed.

Generally, examples of the present invention may be implemented as a computer program product with a program code, the program code being operative for performing one of the methods when the computer program product runs on a computer. The program code may for example be stored on a machine-readable carrier.

Other examples comprise the computer program for performing one of the methods described herein, stored on a machine-readable carrier. In other words, an examples of the method is, therefore, a computer program having a program code for performing one of the methods described herein, when the computer program runs on a computer.

A further examples of the methods is, therefore, a data carrier (or a digital storage medium, or a computer-readable medium) comprising, recorded thereon, the computer program for performing one of the methods described herein. A further example is, therefore, a data stream or a sequence of signals representing the computer program for performing one of the methods described herein. The data stream or the sequence of signals may for example be configured to be transferred via a data communication connection, for example via the Internet. A further examples comprises a processing means, for example a computer, or a programmable logic device, configured to or adapted to perform one of the methods described herein. A further examples comprises a computer having installed thereon the computer program for performing one of the methods described herein.

In some examples, a programmable logic device (for example a field programmable gate array) may be used to perform some or all of the functionalities of the methods described herein. In some examples, a field programmable gate array may cooperate with a microprocessor in order to perform one of the methods described herein. Generally, the methods are preferably performed by any hardware apparatus. The above described examples are merely illustrative for the principles of the present examples. It is understood that modifications and variations of the arrangements and the details described herein will be apparent to others skilled in the art. It is the intent, therefore, to be limited only by the scope of the impending patent claims and not by the specific details presented by way of description and explanation of the examples herein.

## Claims

1. A semiconductor device system comprising a central controller (1) and a plurality of hardware nodes (2, 3, 4) implemented in application-specific integrated circuit, ASIC, the hardware nodes (2, 3, 4) being mutually interconnected with each other through a plurality of hard-wired connections (2.4, 3.4, 4.4) which support the transmissions of globally asynchronous continuous-time binary value, CTBV, signals, in such a way that each hard-wired connection supports the propagation of one unique CTBV signal from first transmitting hardware node connected to the hard-wired connection to at least one receiving hardware node connected to the hard-wired connection, so as to define at least one point-to-point(s) communication path between at least two hardware nodes, configured as processing nodes (2, 3), along a sequence of hard-wired connections connected to each other through at least one switching circuitry (12'),
wherein the at least one switching circuitry (12') is controlled by at least one hardware node, of the plurality of hardware nodes, which is configured as communication node, the at least one switching circuitry (12') being configured to selectably connect, based on configuration data, at least two hard-wired connections in the sequence of hard-wired connections, so as to permit the transmission of each CTBV signal along the sequence of hard-wired connections, wherein the at least one switching circuitry (12') is latency-deterministic,
wherein each hardware node configured as processing node and each hardware node configured as communication node is configured to be sequentially in one of at least the following phases:
an operative phase (23), during which the hardware node is operative to receive CTBV signals and perform processing on received CTBV signals and/or to perform processing to obtain processed CTBV signals and to transmit the CTBV signals; and
a non-operative phase, during which the hardware node performs a non-operative procedure, refraining from transmitting and receiving CTBV signals, wherein each hardware node of the plurality of hardware nodes is configured to download the configuration data through a package-switched configuration communication path (9) during the non-operative phase, the configuration data defining the at least one point-to-point(s) communication path by defining which of the hard-wired connections is to be connected to which other hard-wired connection, so as to latency-deterministically support the transmission of CTBV signals,
the central controller (1) being configured to transmit a global start command (7) and a global stop command towards the plurality of hardware nodes,
wherein each hardware node configured as processing node and each hardware node configured as communication node is configured to enter the operative phase (23) from the non-operative phase triggered by the reception of the global start command (7), and/or each hardware node configured as processing node and each hardware node configured as communication node is configured to enter the non-operative phase (23) from the operative phase triggered by the reception of a global stop command (7).

2. The semiconductor device system according to claim 1, wherein at least one hardware node of the plurality of hardware nodes is selectably configurable, by the configuration data, between:
being configured as a processing node (2, 3); and
being configured as a communication node (4).

3. The semiconductor device system of any of the preceding claims, wherein at least one hardware node configured as a communication node (4a) includes:
at least one first switching circuitry terminal (4-11) connected to at least one first hard-wired connection (2.4a);
at least one second switching terminal (4-21) connected to at least one second latency-deterministic hard-wired connection (4.4);
at least one third switching terminal (4-22) connected to at least one third latency-deterministic hard-wired connection (2.4c),
the at least one hardware node (4a) being configured to select between:
connecting the first switching circuitry terminal (4-11) with the at least one second switching circuitry terminal (4-21), thereby being part of a first point-to-point(s) communication path; and
connecting the first switching circuitry terminal (4-11) with the at least one third switching circuitry terminal (4-22), thereby being part of a second point-to-point(s) communication path, thereby deactivating the first point-to-point(s) communication path.

4. The semiconductor device system of any of the preceding claims, wherein the at least one switching circuitry (12') is so as to delay the propagation of the CTBV signal only based on the hardware configuration of the at least one switching circuitry (12') but not on any of the CTBV signal(s) inputted to the switching circuitry (12').

5. The semiconductor device system of any of the preceding claims, wherein the at least one switching circuitry (12') is an asynchronous combinatorial component.

6. The semiconductor device system of any of the preceding claims, wherein each hardware node is configured, when in non-operative phase (22, 22a, 22b) but ready to enter the operative phase (23), to provide information (5) signalling readiness to enter the operative phase (23) to the central controller (1), wherein the central controller (1) is configured to trigger the transmission of the global start command (7) at the reception of the information (5) signalling readiness to enter the operative phase (23) of the totality of hardware nodes configured as processing nodes and by the totality of hardware nodes configured as communication nodes.

7. The semiconductor device system of claim 6, connectable to a further semiconductor device having a second-tier controller and a plurality of further hardware nodes, wherein the central controller (1) is configured, when connected to the further semiconductor device, to transmit the global start command (7) and/or the global stop command (7) also to the further semiconductor device, the central controller (1) being configured to receive, from the second-tier controller, information (5) signalling readiness to enter the operative phase (23) by the further hardware nodes.

8. The semiconductor device system of any of the preceding claims,
wherein each hardware node is configured, once in the non-operative phase, to download, if present, the configuration data onto a local configuration memory (420) of the hardware node, the hardware node being configured to subsequently:
in case the configuration data have been received, perform a reconfiguration using the downloaded configuration data; and
in case the configuration data have not been received, either perform a reconfiguration using previously downloaded configuration data, or perform a re-initialization.

9. The semiconductor device system of any of the preceding claims, wherein the non-operative phase includes, as subphases, a configuration download phase (21) and at least one transition phase (22),
wherein during the configuration download phase (21) each hardware node configured as processing node and each hardware node configured as communication node is ready to download the configuration data and, provided that the configuration data are present, it also downloads the configuration data,
wherein the reconfiguration or re-initialization is performed during the at least one transition phase (22),
wherein entering into the configuration download phase (21) is conditioned by the reception of a configuration download command (6) provided to each of the plurality of hardware nodes configured as processing nodes and configured as communication nodes or to a subgroup of them which is to be reconfigured,
wherein entering into the at least one transition phase (22) is conditioned by the reception of a transition command (6), provided to the hardware node.

10. The semiconductor device system of any of claims 8-9, wherein the local configuration memory (420) includes multiple enumerated memory segments enumerated according to a predetermined sequence, wherein each hardware node configured as processing node and each hardware node configured as communication node is configured, during the same non-operative phase, to download multiple enumerated configuration data to be written in the multiple enumerated memory segments according to the predetermined sequence,
wherein the hardware node is configured, in subsequent occurrences of the non-operative phase, to use the previously written enumerated configuration data according to the predetermined sequence for performing subsequent reconfigurations or re-initializations, without downloading the configuration data.

11. The semiconductor device system of claim 10, wherein each hardware node configured as processing node and each hardware node configured as communication node is configured, in case no configuration data are downloaded in a current non-operative phase, to select between:
performing a reconfiguration using the enumerated configuration data which are in the next enumerated memory segment according to the predetermined sequence; and
performing a re-initialization without a reconfiguration.

12. The semiconductor device system of any of the preceding claims, wherein at least one processing node is configured or configurable as input/output, I/O, node as a particular case of a processing node, so as to be configured to:
receive a non-CTBV input from a non-CTBV input connection, convert the non-CTBV input onto a CTBV signal, and transmit the converted CTBV signal to a hard-wired connection, and/or
receive a CTBV signal from a hard-wired connection, convert the CTBV signal onto a non-CTBV signal, and transmit the converted non-CTBV signal to a non-CTBV connection.

13. The semiconductor device system of any of the preceding claims, being configured for implementing a spiking neural network, SNN, the SNN comprising a plurality of neurons, at least one neuron of the plurality of neurons being configured to have runtime configurable parameter(s) and being configured to output at least one CTBV signal processed as determined by the runtime configurable parameter(s), the SNN including a plurality of synapses between the neurons, each synapse of the plurality of synapses being configured to provide an input signal to a neuron, the signal being provided by an output signal of the same or another neuron,
wherein at least one neuron of the plurality of neurons is implemented in one unique processing node of the plurality of processing nodes, and at least one synapse is implemented in a respective point-to-point(s) communication path of the plurality of point-to-point(s) communication paths, CTBV signals being transmitted by each processing node to encode the values outputted by the neurons.

14. The semiconductor device system of any of the preceding claims, wherein the at least one point-to-point(s) communication path is queueless, so as to cause the CTBV signals to propagate without delays due to simultaneously propagating CTBV signals.

15. The semiconductor device system of any of the preceding claims, wherein the hardware nodes do not share a global clock.

16. The semiconductor device system of any of the preceding claims, further comprising a configuration device (200) configured to
command a transmission of a configuration download command (6) to the plurality of hardware nodes;
transmit configuration data in a subsequent configuration download phase (21) to at least one hardware node, configured as processing node or configured as communication node, which has entered the configuration download phase (22).

17. A method for a semiconductor device system according to any of claims 1-15, the method comprising:
downloading, by the hardware nodes of the plurality of hardware nodes of the semiconductor device system, configuration data through a package-switched configuration communication path (9);
by the hardware nodes of the semiconductor device system configured as processing nodes, processing, transmitting and/or receiving CTBV signals according to the downloaded configuration data; and
by at least one hardware node of the semiconductor device system configured as communication node, based on the downloaded configuration data selectably connecting, by at least one latency-deterministic switching circuitry (12') controlled by the at least one hardware node configured as communication node, at least two hard-wired connections in the sequence of hard-wired connections, thereby permitting the transmission of CTBV signals along the sequence of hard-wired connections.

18. The method of claim 17, comprising:
commanding a transmission of a configuration download command (6) to the plurality of hardware nodes;
transmitting configuration data in a subsequent configuration download phase (21) to at least one hardware node, configured as processing node or configured as communication node, which has entered the configuration download phase (22).

19. A non-transitory storage unit storing instruction which, when executed by the semiconductor device system of any of claims 1-15, cause the the semiconductor device system to perform the method of claim 18.

## Patentansprüche

1. Ein Halbleiterbauelementsystem, das eine zentrale Steuerungsvorrichtung (1) und eine Mehrzahl von Hardware-Knoten (2, 3, 4) aufweist, die in einer anwendungsspezifischen integrierten Schaltung, ASIC, implementiert sind, wobei die Hardware-Knoten (2, 3, 4) über eine Mehrzahl von festverdrahteten Verbindungen (2.4, 3.4, 4.4) miteinander verbunden sind, welche die Übertragungen von global asynchronen zeitkontinuierlichen Binärwertsignalen, CTBV-Signalen, derart unterstützen, dass jede festverdrahtete Verbindung die Ausbreitung eines eindeutigen CTBV-Signals von einem ersten übertragenden Hardware-Knoten, der mit der festverdrahteten Verbindung verbunden ist, zu zumindest einem empfangenden Hardware-Knoten, der mit der festverdrahteten Verbindung verbunden ist, unterstützt, um zumindest einen Punkt-zu-Punkt(e)-Kommunikationsweg zwischen zumindest zwei Hardware-Knoten, die als Verarbeitungsknoten (2, 3) konfiguriert sind, entlang einer Sequenz von festverdrahteten Verbindungen zu definieren, die über zumindest einen Umschaltschaltungsaufbau (12') miteinander verbunden sind,
wobei der zumindest eine Umschaltschaltungsaufbau (12') von zumindest einem Hardware-Knoten der Mehrzahl von Hardware-Knoten, der als Kommunikationsknoten konfiguriert ist, gesteuert wird, wobei der zumindest eine Umschaltschaltungsaufbau (12') dazu konfiguriert ist, zumindest zwei festverdrahtete Verbindungen in der Sequenz von festverdrahteten Verbindungen auf der Basis von Konfigurationsdaten auf wählbare Weise zu verbinden, um die Übertragung jedes CTBV-Signals entlang der Sequenz von festverdrahteten Verbindungen zu ermöglichen, wobei der zumindest eine Umschaltschaltungsaufbau (12') Latenz-deterministisch ist,
wobei jeder Hardware-Knoten, der als Verarbeitungsknoten konfiguriert ist, und jeder Hardware-Knoten, der als Kommunikationsknoten konfiguriert ist, dazu konfiguriert ist, in einer zumindest der folgenden Phasen sequenziell zu sein:
einer operativen Phase (23), während welcher der Hardware-Knoten wirksam ist, um CTBV-Signale zu empfangen und eine Verarbeitung empfangener CTBV-Signale durchzuführen und/oder um eine Verarbeitung durchzuführen, um verarbeitete CTBV-Signale zu erhalten, und um die CTBV-Signale zu übertragen; und
einer nicht operativen Phase, während welcher der Hardware-Knoten einen nicht operativen Vorgang durchführt, unter Verzicht auf ein Übertragen und Empfangen von CTBV-Signalen, wobei jeder Hardware-Knoten der Mehrzahl von Hardware-Knoten dazu konfiguriert ist, während der nicht operativen Phase die Konfigurationsdaten über einen Paket-geschalteten Konfigurationskommunikationsweg (9) herunterzuladen, wobei die Konfigurationsdaten den zumindest einen Punkt-zu-Punkt(e)-Kommunikationsweg definieren, durch Definieren, welche der festverdrahteten Verbindungen mit welcher anderen festverdrahteten Verbindung zu verbinden ist, um die Übertragung von CTBV-Signalen Latenz-deterministisch zu unterstützen,
wobei die zentrale Steuerungsvorrichtung (1) dazu konfiguriert ist, einen globalen Startbefehl (7) und einen globalen Stoppbefehl in Richtung der Mehrzahl von Hardware-Knoten zu übertragen,
wobei jeder Hardware-Knoten, der als Verarbeitungsknoten konfiguriert ist, und jeder Hardware-Knoten, der als Kommunikationsknoten konfiguriert ist, dazu konfiguriert ist, von der nicht operativen Phase, ausgelöst durch den Empfang des globalen Startbefehls (7), in die operative Phase (23) einzutreten, und/oder jeder Hardware-Knoten, der als Verarbeitungsknoten konfiguriert ist, und jeder Hardware-Knoten, der als Kommunikationsknoten konfiguriert ist, dazu konfiguriert ist, von der operativen Phase, ausgelöst durch den Empfang des globalen Stoppbefehls (7), in die nicht operative Phase (23) einzutreten.

2. Das Halbleiterbauelementsystem gemäß Anspruch 1, wobei zumindest ein Hardware-Knoten der Mehrzahl von Hardware-Knoten durch die Konfigurationsdaten auf wählbare Weise konfigurierbar ist zwischen:
einer Konfiguration als ein Verarbeitungsknoten (2, 3); und
einer Konfiguration als ein Kommunikationsknoten (4).

3. Das Halbleiterbauelementsystem gemäß einem der vorhergehenden Ansprüche, wobei zumindest ein Hardware-Knoten, der als ein Kommunikationsknoten (4a) konfiguriert ist, Folgendes umfasst:
zumindest einen ersten Umschaltschaltungsanschluss (4-11), der mit zumindest einer ersten festverdrahteten Verbindung (2.4a) verbunden ist;
zumindest einen zweiten Umschaltanschluss (4-21), der mit zumindest einer zweiten Latenz-deterministischen, fest verdrahteten Verbindung (4.4) verbunden ist;
zumindest einen dritten Umschaltanschluss (4-22), der mit zumindest einer dritten Latenz-deterministischen, fest verdrahteten Verbindung (2.4c) verbunden ist,
wobei der zumindest eine Hardware-Knoten (4a), dazu konfiguriert ist, zwischen Folgendem zu wählen:
Verbinden des ersten Umschaltschaltungsanschlusses (4-11) mit dem zumindest einen zweiten Umschaltschaltungsanschluss (4-21), wodurch derselbe Teil eines ersten Punkt-zu-Punkt(e)-Kommunikationsweges ist; und
Verbinden des ersten Umschaltschaltungsanschlusses (4-11) mit dem zumindest einen dritten Umschaltschaltungsanschluss (4-22), wodurch derselbe Teil eines zweiten Punkt-zu-Punkt(e)-Kommunikationsweges wird, wodurch der erste Punkt-zu-Punkt(e)-Kommunikationsweg deaktiviert wird.

4. Das Halbleiterbauelementsystem gemäß einem der vorhergehenden Ansprüche, wobei der zumindest eine Umschaltschaltungsaufbau (12') dahingehend gestaltet ist, die Ausbreitung des CTBV-Signals nur auf der Basis der Hardware-Konfiguration des zumindest einen Umschaltschaltungsaufbaus (12'), nicht jedoch auf der Basis des einen oder der mehreren in den Umschaltschaltungsaufbau (12') eingegebenen CTBV-Signale zu verzögern.

5. Das Halbleiterbauelementsystem gemäß einem der vorhergehenden Ansprüche, wobei der zumindest eine Umschaltschaltungsaufbau (12') eine asynchrone kombinatorische Komponente ist.

6. Das Halbleiterbauelementsystem gemäß einem der vorhergehenden Ansprüche, wobei jeder Hardware-Knoten dazu konfiguriert ist, dann, wenn sich derselbe in der nicht operativen Phase (22, 22a, 22b) befindet, jedoch bereit zum Eintritt in die operative Phase (23) ist, Informationen (5), die eine Bereitschaft zum Eintritt in die operative Phase (23) anzeigen, an die Steuerungsvorrichtung (1) zu liefern, wobei die Steuerungsvorrichtung (1) dazu konfiguriert ist, bei Empfang der Informationen (5), die eine Bereitschaft zum Eintritt in die operative Phase (23) anzeigen, die Übertragung des globalen Startbefehls (7) der Gesamtheit von Hardware-Knoten, die als Verarbeitungsknoten konfiguriert sind, und durch die Gesamtheit von Hardware-Knoten, die als Kommunikationsknoten konfiguriert sind, , auszulösen.

7. Das Halbleiterbauelementsystem gemäß Anspruch 6, das mit einem weiteren Halbleiterbauelement verbindbar ist, das eine Steuerungsvorrichtung der zweiten Schicht und eine Mehrzahl weiterer Hardware-Knoten aufweist, wobei die Steuerungsvorrichtung (1) dazu konfiguriert ist, bei Verbindung mit dem weiteren Halbleiterbauelement den globalen Startbefehl (7) und/oder den globalen Stoppbefehl (7) auch an das weitere Halbleiterbauelement zu übertragen, wobei die zentrale Steuerungsvorrichtung (1) dazu konfiguriert ist, von der Steuerungsvorrichtung der zweiten Schicht Informationen (5), die eine Bereitschaft zum Eintritt in die operative Phase (23) anzeigen, durch die weiteren Hardware-Knoten zu empfangen.

8. Das Halbleiterbauelementsystem gemäß einem der vorhergehenden Ansprüche,
wobei jeder Hardware-Knoten dazu konfiguriert ist, einmal in der nicht operativen Phase die Konfigurationsdaten, sofern vorhanden, auf einen lokalen Konfigurationsspeicher (420) des Hardware-Knotens herunterzuladen, wobei der Hardware-Knoten nachfolgend zu Folgendem konfiguriert ist:
dann, wenn die Konfigurationsdaten empfangen wurden, eine Neukonfiguration unter Verwendung der heruntergeladenen Konfigurationsdaten durchzuführen; und
dann, wenn die Konfigurationsdaten nicht empfangen wurden, entweder eine Neukonfiguration unter Verwendung zuvor heruntergeladener Konfigurationsdaten durchzuführen oder eine Neuinitialisierung durchzuführen.

9. Das Halbleiterbauelementsystem gemäß einem der vorhergehenden Ansprüche, wobei die nicht operative Phase eine Konfigurations-Herunterlade-Phase (21) und zumindest eine Übergangsphase (22) als Teilphasen umfasst,
wobei während der Konfigurations-Herunterlade-Phase (21) jeder Hardware-Knoten, der als Verarbeitungsknoten konfiguriert ist, und jeder Hardware-Knoten, der als Kommunikationsknoten konfiguriert ist, dazu bereit ist, die Konfigurationsdaten herunterzuladen, und die Konfigurationsdaten unter der Voraussetzung, dass die Konfigurationsdaten vorhanden sind, auch herunterlädt,
wobei die Neukonfiguration oder Neuinitialisierung während der zumindest einen Übergangsphase (22) durchgeführt wird,
wobei ein Eintreten in die Konfigurations-Herunterlade-Phase (21) von dem Empfang eines Konfigurations-Herunterlade-Befehls (6) abhängig ist, der an jeden der Mehrzahl von Hardware-Knoten, die als Verarbeitungsknoten konfiguriert sind und die als Kommunikationsknoten konfiguriert sind, oder an eine Teilgruppe derselben, die neu zu konfigurieren ist, übermittelt wird,
wobei ein Eintreten in die zumindest eine Übergangsphase (22) von dem Empfang eines Übergangsbefehls (6) abhängig ist, der an den Hardware-Knoten übermittelt wird.

10. Das Halbleiterbauelementsystem gemäß einem der Ansprüche 8 bis 9, wobei der lokale Konfigurationsspeicher (420) mehrere aufgezählte Speichersegmente umfasst, die entsprechend einer vorbestimmten Sequenz aufgezählt sind, wobei jeder Hardware-Knoten, der als Verarbeitungsknoten konfiguriert ist, und jeder Hardware-Knoten, der als Kommunikationsknoten konfiguriert ist, dazu konfiguriert ist, während derselben nicht operativen Phase mehrere aufgezählte Kommunikationsdaten herunterzuladen, die entsprechend der vorbestimmten Sequenz in die mehreren aufgezählten Speichersegmente zu schreiben sind,
wobei der Hardware-Knoten dazu konfiguriert ist, bei nachfolgenden Vorkommnissen der nicht operativen Phase die zuvor geschriebenen aufgezählten Konfigurationsdaten entsprechend der vorbestimmten Sequenz zu verwenden, um nachfolgende Neukonfigurationen oder Neuinitialisierungen ohne Herunterladen der Konfigurationsdaten durchzuführen.

11. Das Halbleiterbauelementsystem gemäß Anspruch 10, wobei jeder Hardware-Knoten, der als Verarbeitungsknoten konfiguriert ist, und jeder Hardware-Knoten, der als Kommunikationsknoten konfiguriert ist, dazu konfiguriert ist, dann, wenn in einer aktuellen nicht operativen Phase keine Konfigurationsdaten heruntergeladen werden, zwischen Folgendem zu wählen:
Durchführen einer Neukonfiguration unter Verwendung der aufgezählten Konfigurationsdaten, die sich entsprechend der vorbestimmten Sequenz in dem nächsten aufgezählten Speichersegment befinden; und
Durchführen einer Neuinitialisierung ohne eine Neukonfiguration.

12. Das Halbleiterbauelementsystem gemäß einem der vorhergehenden Ansprüche, wobei zumindest ein Verarbeitungsknoten als Eingabe/Ausgabe(I/O)-Knoten als ein bestimmter Fall eines Verarbeitungsknotens konfiguriert oder konfigurierbar ist, um zu Folgendem konfiguriert zu sein:
Empfangen einer Nicht-CTBV-Eingabe von einer Nicht-CTBV-Eingabeverbindung, Umwandeln der Nicht-CTBV-Eingabe in ein CTBV-Signal und Übertragen des umgewandelten CTBV-Signals an eine festverdrahtete Verbindung; und/oder
Empfangen eines CTBV-Signals von einer festverdrahteten Verbindung, Umwandeln des CTBV-Signals in ein Nicht-CTBV-Signal und Übertragen des umgewandelten Nicht-CTBV-Signals an eine Nicht-CTBV-Verbindung.

13. Das Halbleiterbauelementsystem gemäß einem der vorhergehenden Ansprüche, das zum Implementieren eines gepulsten neuronalen Netzes, SNN (spiking neural network), konfiguriert ist, wobei das SNN eine Mehrzahl von Neuronen aufweist, wobei zumindest ein Neuron der Mehrzahl on Neuronen dazu konfiguriert ist, einen oder mehrere hinsichtlich einer Laufzeit konfigurierbare Parameter zu haben, und dazu konfiguriert ist, zumindest ein CTBV-Signal auszugeben, das wie von dem oder den hinsichtlich einer Laufzeit konfigurierbaren Parametern bestimmt verarbeitet wurde, wobei das SNN eine Mehrzahl von Synapsen zwischen den Neuronen umfasst, wobei jede Synapse der Mehrzahl von Synapsen dazu konfiguriert ist, ein Eingabesignal an ein Neuron zu übermitteln, wobei das Signal von einem Ausgabesignal desselben oder eines anderen Neurons übermittelt wird,
wobei zumindest ein Neuron der Mehrzahl von Neuronen in einem eindeutigen Verarbeitungsknoten der Mehrzahl von Verarbeitungsknoten implementiert ist und zumindest eine Synapse in einem entsprechenden Punkt-zu-Punkt(e)-Kommunikationsweg der Mehrzahl von Punkt-zu-Punkt(e)-Kommunikationswegen implementiert ist, wobei die CTBV-Signale von jedem Verarbeitungsknoten übertragen werden, um die von den Neuronen ausgegebenen Werte zu codieren.

14. Das Halbleiterbauelementsystem gemäß einem der vorhergehenden Ansprüche, wobei der zumindest eine Punkt-zu-Punkt(e)-Kommunikationsweg ohne Warteschlange ist, um zu bewirken, dass sich die CTBV-Signale ohne Verzögerungen aufgrund von sich gleichzeitig ausbreitenden CTBV-Signalen ausbreiten.

15. Das Halbleiterbauelementsystem gemäß einem der vorhergehenden Ansprüche, wobei die Hardware-Knoten keinen globalen Takt teilen.

16. Das Halbleiterbauelementsystem gemäß einem der vorhergehenden Ansprüche, das ferner eine Konfigurationsvorrichtung (200) aufweist, die zu Folgendem konfiguriert ist:
Befehlen einer Übertragung eines Konfigurations-Herunterlade-Befehls (6) an eine Mehrzahl von Hardware-Knoten;
Übertragen von Konfigurationsdaten in einer nachfolgenden Konfigurations-Herunterlade-Phase (21) an zumindest einen Hardware-Knoten, der als Verarbeitungsknoten konfiguriert ist oder als Kommunikationsknoten konfiguriert ist und der in die Konfigurations-Herunterlade-Phase (22) eingetreten ist.

17. Ein Verfahren für ein Halbleiterbauelementsystem gemäß einem der Ansprüche 1 bis 15, wobei das Verfahren folgende Schritte aufweist:
Herunterladen, durch die Hardware-Knoten der Mehrzahl von Hardware-Knoten des Halbleiterbauelementsystems, von Konfigurationsdaten über einen Paket-geschalteten Konfigurationskommunikationsweg (9);
Verarbeiten, Übertragen und/oder Empfangen, durch die Hardware-Knoten des Halbleiterbauelementsystems, die als Verarbeitungsknoten konfiguriert sind, von CTBV-Signalen entsprechend den heruntergeladenen Konfigurationsdaten; und
Verbinden, durch zumindest einen Hardware-Knoten des Halbleiterbauelementsystems, der als Kommunikationsknoten konfiguriert ist, auf der Basis der heruntergeladenen Konfigurationsdaten, durch zumindest einen Latenz-deterministischen Umschaltschaltungsaufbau (12'), die von dem zumindest einen Hardware-Knoten gesteuert wird, der als Kommunikationsknoten konfiguriert ist, von zumindest zwei festverdrahteten Verbindungen in der Sequenz von festverdrahteten Verbindungen, wodurch die Übertragung von CTBV-Signalen entlang der Sequenz von festverdrahteten Verbindungen ermöglicht wird.

18. Das Verfahren gemäß Anspruch 17, das folgende Schritte aufweist:
Befehlen einer Übertragung eines Konfigurations-Herunterlade-Befehls (6) an die Mehrzahl von Hardware-Knoten;
Übertragen von Konfigurationsdaten in einer nachfolgenden Konfigurations-Herunterlade-Phase (21) an zumindest einen Hardware-Knoten, der als Verarbeitungsknoten konfiguriert ist oder als Kommunikationsknoten konfiguriert ist und der in die Konfigurations-Herunterlade-Phase (22) eingetreten ist.

19. Eine nicht flüchtige Speichereinheit, in der Anweisungen gespeichert sind, die bei Ausführung durch das Halbleiterbauelementsystem gemäß einem der Ansprüche 1 bis 15, bewirken, dass das Halbleiterbauelementsystem das Verfahren von Anspruch 18 durchführt.

## Revendications

1. Système de dispositif à semi-conducteur comprenant un dispositif de commande central (1) et une pluralité de nœuds matériels (2, 3, 4) implémentés dans un circuit intégré spécifique à une application, ASIC, les nœuds matériels (2, 3, 4) étant mutuellement interconnectés par le biais d'une pluralité de connexions câblées (2.4, 3.4, 4.4) qui prennent en charge les transmissions de signaux à valeur binaire en temps continu, CTBV, globalement asynchrones, d'une manière telle que chaque connexion câblée prend en charge la propagation d'un signal à CTBV unique depuis un premier nœud matériel de transmission connecté à la connexion câblée vers au moins un nœud matériel de réception connecté à la connexion câblée, de manière à définir au moins une voie de communication point à point(s) entre au moins deux nœuds matériels, configurés en tant que nœuds de traitement (2, 3), le long d'une séquence de connexions câblées connectées les unes aux autres par le biais d'au moins une circuiterie de commutation (12'),
dans lequel la au moins une circuiterie de commutation (12') est commandée par au moins un nœud matériel, de la pluralité de nœuds matériels, qui est configuré en tant que nœud de communication, la au moins une circuiterie de commutation (12') étant configurée pour connecter de manière sélectionnable, sur la base de données de configuration, au moins deux connexions câblées de la séquence de connexions câblées, de manière à permettre la transmission de chaque signal à CTBV le long de la séquence de connexions câblées, dans lequel la au moins une circuiterie de commutation (12') est à latence déterministe,
dans lequel chaque nœud matériel configuré en tant que nœud de traitement et chaque nœud matériel configuré en tant que nœud de communication est configuré pour être séquentiellement dans l'une d'au moins les phases suivantes :
une phase fonctionnelle (23), pendant laquelle le nœud matériel fonctionne pour recevoir des signaux à CTBV et réaliser un traitement sur les signaux à CTBV reçus et/ou pour réaliser un traitement afin d'obtenir des signaux à CTBV traités et pour transmettre les signaux CTBV ; et
une phase non fonctionnelle, pendant laquelle le nœud matériel réalise une procédure non fonctionnelle, s'abstenant de transmettre et de recevoir des signaux à CTBV, dans lequel chaque nœud matériel de la pluralité de nœuds matériels est configuré pour télécharger les données de configuration par le biais d'une voie de communication (9) à configuration à commutation de paquets pendant la phase non fonctionnelle, les données de configuration définissant la au moins une voie de communication point à point(s) en définissant laquelle des connexions câblées doit être connectée à laquelle autre connexion câblée, de manière à prendre en charge par latence déterministe la transmission de signaux à CTBV,
le dispositif de commande central (1) étant configuré pour transmettre une instruction de démarrage globale (7) et une instruction d'arrêt globale vers la pluralité de nœuds matériels,
dans lequel chaque nœud matériel configuré en tant que nœud de traitement et chaque nœud matériel configuré en tant que nœud de communication est configuré pour entrer dans la phase fonctionnelle (23) depuis la phase non fonctionnelle déclenchée par la réception de l'instruction de démarrage globale (7), et/ou chaque nœud matériel configuré en tant que nœud de traitement et chaque nœud matériel configuré en tant que nœud de communication est configuré pour entrer dans la phase non fonctionnelle (23) depuis la phase fonctionnelle déclenchée par la réception d'une instruction d'arrêt globale (7).

2. Système de dispositif à semi-conducteur selon la revendication 1, dans lequel au moins un nœud matériel de la pluralité de nœuds matériels est configurable de manière sélectionnable, par les données de configuration, entre :
étant configuré en tant que nœud de traitement (2, 3) ; et
étant configuré en tant que nœud de communication (4).

3. Système de dispositif à semi-conducteur selon l'une quelconque des revendications précédentes, dans lequel au moins un nœud matériel configuré en tant que nœud de communication (4a) inclut :
au moins une première borne de circuiterie de commutation (4-11) connectée à au moins une première connexion câblée (2.4a) ;
au moins une deuxième borne de commutation (4-21) connectée à au moins une deuxième connexion câblée à latence déterministe (4.4) ;
au moins une troisième borne de commutation (4-22) connectée à au moins une troisième connexion câblée à latence déterministe (2.4c),
dans lequel l'au moins un nœud matériel (4a) est configuré pour faire une sélection entre :
la connexion de la première borne de circuiterie de commutation (4-11) à la au moins une deuxième borne de circuiterie de commutation (4-21), faisant ainsi partie d'une première voie de communication point à point(s) ; et
la connexion de la première borne de circuiterie de commutation (4-11) à la au moins une troisième borne de circuiterie de commutation (4-22), faisant ainsi partie d'une deuxième voie de communication point à point(s), désactivant ainsi la première voie de communication point à point(s).

4. Système de dispositif à semi-conducteur selon l'une quelconque des revendications précédentes, dans lequel la au moins une circuiterie de commutation (12') sert à différer la propagation du signal à CTBV uniquement sur la base de la configuration matérielle de la au moins une circuiterie de commutation (12') mais pas de l'un quelconque du(des) signal(aux) à CTBV entré(s) dans la circuiterie de commutation (12').

5. Système de dispositif à semi-conducteur selon l'une quelconque des revendications précédentes, dans lequel la au moins une circuiterie de commutation (12') est un composant combinatoire asynchrone.

6. Système de dispositif à semi-conducteur selon l'une quelconque des revendications précédentes, dans lequel chaque nœud matériel est configuré, lorsqu'il est dans la phase non fonctionnelle (22, 22a, 22b) mais prêt à entrer dans la phase fonctionnelle (23), pour fournir, au dispositif de commande central (1), des informations (5) signalant le fait d'être prêt à entrer dans la phase fonctionnelle (23), dans lequel le dispositif de commande central (1) est configuré pour déclencher la transmission de l'instruction de démarrage globale (7) à la réception de l'information (5) signalant le fait d'être prêt à entrer dans la phase fonctionnelle (23) de la totalité de nœuds matériels configurés en tant que nœuds de traitement et par la totalité de nœuds matériels configurés en tant que nœuds de communication.

7. Système de dispositif à semi-conducteur selon la revendication 6, pouvant être connecté à un autre dispositif à semi-conducteur présentant un dispositif de commande de second rang et une pluralité d'autres nœuds matériels, dans lequel le dispositif de commande central (1) est configuré, lorsqu'il est connecté à l'autre dispositif à semi-conducteur, pour transmettre l'instruction de démarrage globale (7) et/ou l'instruction d'arrêt globale (7) également à l'autre dispositif à semi-conducteur, le dispositif de commande central (1) étant configuré pour recevoir, en provenance du dispositif de commande de second rang, des informations (5) signalant le fait d'être prêt à entrer dans la phase fonctionnelle (23) par les autres nœuds matériels.

8. Système de dispositif à semi-conducteur selon l'une quelconque des revendications précédentes,
dans lequel chaque nœud matériel est configuré, une fois dans la phase non fonctionnelle, pour télécharger, le cas échéant, les données de configuration sur une mémoire de configuration locale (420) du nœud matériel, le nœud matériel étant configuré pour ensuite :
dans le cas où les données de configuration ont été reçues, réaliser une reconfiguration à l'aide des données de configuration téléchargées ; et
dans le cas où les données de configuration n'ont pas été reçues, soit réaliser une reconfiguration à l'aide de données de configuration précédemment téléchargées, soit réaliser une réinitialisation.

9. Système de dispositif à semi-conducteur selon l'une quelconque des revendications précédentes, dans lequel la phase non fonctionnelle inclut, en tant que sous-phases, une phase de téléchargement de configuration (21) et au moins une phase de transition (22),
dans lequel, pendant la phase de téléchargement de configuration (21), chaque nœud matériel configuré en tant que nœud de traitement et chaque nœud matériel configuré en tant que nœud de communication est prêt à télécharger les données de configuration et, à condition que les données de configuration soient présentes, il télécharge également les données de configuration,
dans lequel la reconfiguration ou la réinitialisation est réalisée pendant la au moins une phase de transition (22),
dans lequel l'entrée dans la phase de téléchargement de configuration (21) est conditionnée par la réception d'une instruction de téléchargement de configuration (6) fournie à chacun de la pluralité de nœuds matériels configurés en tant que nœuds de traitement et configurés en tant que nœuds de communication ou à un sous-groupe de ceux-ci qui doivent être reconfigurés,
dans lequel l'entrée dans la au moins une phase de transition (22) est conditionnée par la réception d'une instruction de transition (6), fournie au nœud matériel.

10. Système de dispositif à semi-conducteur selon l'une quelconque des revendications 8-9, dans lequel la mémoire de configuration locale (420) inclut de multiples segments de mémoire énumérés qui sont énumérés en fonction d'une séquence prédéterminée, dans lequel chaque nœud matériel configuré en tant que nœud de traitement et chaque nœud matériel configuré en tant que nœud de communication est configuré, pendant la même phase non fonctionnelle, pour télécharger de multiples données de configuration énumérées à écrire dans les multiples segments de mémoire énumérés en fonction de la séquence prédéterminée,
dans lequel le nœud matériel est configuré, dans des apparitions ultérieures de la phase non fonctionnelle, pour utiliser les données de configuration énumérées précédemment écrites en fonction de la séquence prédéterminée pour réaliser des reconfigurations ou réinitialisations ultérieures, sans télécharger les données de configuration.

11. Système de dispositif à semi-conducteur selon la revendication 10, dans lequel chaque nœud matériel configuré en tant que nœud de traitement et chaque nœud matériel configuré en tant que nœud de communication est configuré, dans le cas où aucune donnée de configuration n'est téléchargée lors d'une phase non fonctionnelle actuelle, pour faire une sélection entre :
réaliser une reconfiguration à l'aide des données de configuration énumérées qui sont dans le segment de mémoire énuméré suivant en fonction de la séquence prédéterminée ; et
réaliser une réinitialisation sans reconfiguration.

12. Système de dispositif à semi-conducteur selon l'une quelconque des revendications précédentes, dans lequel au moins un nœud de traitement est configuré ou configurable comme nœud d'entrée/sortie, E/S, en tant que cas particulier d'un nœud de traitement, de manière à être configuré pour :
recevoir une entrée à non-CTBV provenant d'une connexion d'entrée à non-CTBV, convertir l'entrée à non-CTBV en un signal à CTBV, et transmettre le signal à CTBV converti à une connexion câblée, et/ou
recevoir un signal à CTBV provenant d'une connexion câblée, convertir le signal à CTBV en un signal à non-CTBV et transmettre le signal à non-CTBV converti en une connexion à non-CTBV.

13. Système de dispositif à semi-conducteur selon l'une quelconque des revendications précédentes, qui est configuré pour implémenter un réseau neuronal impulsionnel, SNN, le SNN comprenant une pluralité de neurones, au moins un neurone de la pluralité de neurones étant configuré pour présenter un(des) paramètre(s) configurable(s) en durée d'exécution et étant configuré pour délivrer en sortie au moins un signal à CTBV traité tel que déterminé par le(les) paramètre(s) configurable(s) en durée d'exécution, le SNN incluant une pluralité de synapses entre les neurones, chaque synapse de la pluralité de synapses étant configurée pour fournir un signal d'entrée à un neurone, le signal étant fourni par un signal de sortie du même ou d'un autre neurone,
dans lequel au moins un neurone de la pluralité de neurones est implémenté dans un nœud de traitement unique de la pluralité de nœuds de traitement, et au moins une synapse est implémentée dans une voie de communication point à point(s) respective de la pluralité de voies de communication point à point(s), des signaux à CTBV étant transmis par chaque nœud de traitement pour coder les valeurs entrées par les neurones.

14. Système de dispositif à semi-conducteur selon l'une quelconque des revendications précédentes, dans lequel la au moins une voie de communication point à point(s) est sans fil d'attente, de manière à amener les signaux à CTBV à se propager sans délais en raison de signaux à CTBV à propagation simultanée.

15. Système de dispositif à semi-conducteur selon l'une quelconque des revendications précédentes, dans lequel les nœuds matériels ne partagent pas d'horloge globale.

16. Système de dispositif à semi-conducteur selon l'une quelconque des revendications précédentes, comprenant en outre un dispositif de configuration (200) configuré pour
ordonner une transmission d'une instruction de téléchargement de configuration (6) à la pluralité de nœuds matériels ;
transmettre des données de configuration dans une phase de téléchargement de configuration (21) ultérieure à au moins un nœud matériel, configuré en tant que nœud de traitement ou configuré en tant que nœud de communication, qui est entré dans la phase de téléchargement de configuration (22).

17. Procédé pour un système de dispositif à semi-conducteur selon l'une quelconque des revendications 1-15, le procédé comprenant le fait de :
télécharger, par les nœuds matériels de la pluralité de nœuds matériels du système de dispositif à semi-conducteur, des données de configuration par le biais d'une voie de communication (9) à configuration à commutation de paquets ;
par les nœuds matériels du système de dispositif à semi-conducteur configurés en tant que nœuds de traitement, traiter, transmettre et/ou recevoir des signaux à CTBV en fonction des données de configuration téléchargées ; et
par au moins un nœud matériel du système de dispositif à semi-conducteur configuré en tant que nœud de communication, sur la base des données de configuration téléchargées connectant de manière sélectionnable, par au moins une circuiterie de commutation (12') à latence déterministe commandée par le au moins un nœud matériel configuré en tant que nœud de communication, au moins deux connexions câblées dans la séquence de connexions câblées, permettant ainsi la transmission de signaux à CTBV le long de la séquence de connexions câblées.

18. Procédé selon la revendication 17, comprenant le fait de :
ordonner une transmission d'une instruction de téléchargement de configuration (6) à la pluralité de nœuds matériels ;
transmettre des données de configuration dans une phase de téléchargement de configuration (21) ultérieure à au moins un nœud matériel, configuré en tant que nœud de traitement ou configuré en tant que nœud de communication, qui est entré dans la phase de téléchargement de configuration (22).

19. Unité de stockage non transitoire stockant une instruction qui, lorsqu'elle est exécutée par le système de dispositif à semi-conducteur selon l'une quelconque des revendications 1-15, amène le système de dispositif à semi-conducteur à réaliser le procédé selon la revendication 18.
